(19) Europäisches Patentamt / European Patent Office / Office européen des brevets

(11) **EP 2 031 426 A1**

(12) **EUROPEAN PATENT APPLICATION**
published in accordance with Art. 153(4) EPC


(43) Date of publication:
**04.03.2009 Bulletin 2009/10**

(21) Application number: **07744383.6**

(22) Date of filing: **30.05.2007**

(51) Int Cl.:
***G02B 5/30*** *(2006.01)* ***B32B 27/36*** *(2006.01)*
***B32B 27/40*** *(2006.01)* ***C08G 18/48*** *(2006.01)*
***C09J 129/04*** *(2006.01)* ***C09J 163/00*** *(2006.01)*
***C09J 175/04*** *(2006.01)* ***C09J 175/08*** *(2006.01)*
***G02F 1/1335*** *(2006.01)*

(86) International application number:
**PCT/JP2007/060969**

(87) International publication number:
**WO 2007/139138 (06.12.2007 Gazette 2007/49)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **01.06.2006 JP 2006153484**
**20.06.2006 JP 2006169813**



(71) Applicant: **Teijin Limited**
**Osaka-shi, Osaka 541-0054 (JP)**

(72) Inventors:
- **MATSUO, Jyuho**
**Tokyo 1910065 (JP)**
- **UCHIYAMA, Akihiko**
**Hino-shi Tokyo 1910065 (JP)**
- **ONO, Yuhei**
**Hino-shi Tokyo 1910065 (JP)**

(74) Representative: **Hallybone, Huw George et al**
**Carpmaels & Ransford**
**43-45 Bloomsbury Square**
**London WC1A 2RA (GB)**


(54) **POLARIZING PLATE AND METHOD FOR PRODUCING THE SAME**


(57) The present invention is to provide a polarizing plate having a retardation function while having excellent environmental resistance. The invention is concerned with a polarizing plate including a polarizer having, on at least one surface thereof, a protective film having a function as a retardation film via an adhesive layer, wherein the adhesive layer is formed of an adhesive containing a polyurethane; and the protective film is composed of a polycarbonate based resin or an amorphous polyolefin resin having a glass transition temperature in the range of from 100°C to 180°C, which is a copolymer containing an ethylene unit represented by the following formula (E) and a cyclic olefin unit represented by the following formula (F):

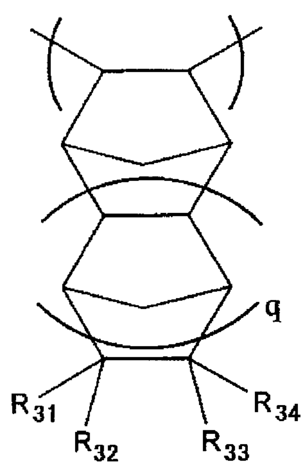

(F)

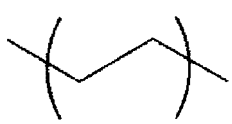

(E)


EP 2 031 426 A1

## Description

[Technical Field]

The present invention relates to a polarizing plate and a method for producing the same. In detail, the invention relates to a polarizing plate having a retardation function while being excellent in durability, for example, chemical resistance, environmental resistance, etc. and a method for producing the same.

[Background Art]

In recent years, polarizing plates have been used in various applications and diverse environments, and polarizing plates having a function so as to withstand even severe use circumstances which have not been seen so far are expected. Here, usual polarizing plates have a polarizer protective film on one surface or both surfaces of a polarizer, and in the existing circumstances, a triacetate cellulose based resin film is still used as the polarizer protective film. However, in the triacetate cellulose based resin film, dimensional contraction occurs under an environmental test at a high temperature and a high humidity, and it was a serious problem that the image quality of, for example, a liquid crystal display device to be used as an application of a polarizing plate is affected due to deterioration of the function of the polarizer to be consequently caused or the generation of a stress following the contraction.

Also, impartation of a retardation function to a polarizing plate has hitherto been realized by sticking a retardation film to the polarizing plate with a pressure-sensitive adhesive. However, for the purpose of aiming at a further decrease in the cost of a liquid crystal display device, reduction in the number of members and the man-hour of works has been desired. At present, there are made grappling for revealing a retardation function in a polarizer protective film and grappling for protecting a polarizer upon direct adhesion of a retardation film to the polarizer.

As the grappling for revealing a retardation function in a polarizer protective film, for example, Patent Document 1 describes that a triacetate cellulose based resin film is stretched to reveal a retardation function and that the thus stretched triacetate cellulose based resin film is used as a polarizer protective film. However, in Patent Document 1, since the triacetate cellulose based resin film is still used as amaterial for abase, not onlya loweringof optical properties in an environmental resistance test was noticeable, but a problem of dimensional stability remained.

As grappling for the direct adhesion of a retardation film to a polarizer, for example, Patent Document 2 describes an optical compensation layer-provided polarizing plate in which two kinds of optical compensation layers are successively stacked on a polarizer. However, in Patent Document 2, the two kinds of optical compensation layers are stacked via an arbitrary pressure-sensitive adhesive layer or adhesive layer. Accordingly, the adhesive strength between the polarizer and the optical compensation layer is not sufficient depending upon the kinds of a resin which becomes the optical compensation layer and an adhesive, and in particular, a further enhancement in the environmental resistance is demanded.

Accordingly, even at present, a polarizing plate having a retardation function while having excellent environmental resistance has not been obtained yet, and its realization has been desired.

[Patent Document 1] JP-A-2003-279729
[Patent Document 2] JP-A-2007-114762

[Disclosure of the Invention]

[Problems that the Invention is to Solve]

A primary object of the invention is to provide a polarizing plate having a retardation function while having excellent environmental resistance.

[Means for Solving the Problems]

In order to solve the foregoing problems, the present inventors thought that a material of a protective film for polarizer having a retardation function in place of the triacetate cellulose based resin film and an adhesive to be used for the adhesion between the protective film for polarizer and the polarizer are the most important and made extensive and intensive investigations from both sides thereof. As a result, it has been found that according to a combination of a specified film material and a specified adhesive, a polarizing plate having a retardation function while having excellent environmental resistance is obtainable, leading to accomplishment of the invention.

That is, the invention is concerned with a polarizing plate comprising a polarizer having, on at least one surface

thereof, a protective film having a function as a retardation film via an adhesive layer, wherein the foregoing adhesive layer is formed of an adhesive containing a polyurethane; and the foregoing protective film is composed of a polycarbonate based resin or an amorphous polyolefin resin having a glass transition temperature in the range of from 100˚C to 180˚C, which is a copolymer containing an ethylene unit represented by the following formula (E) and a cyclic olefin unit represented by the following formula (F).

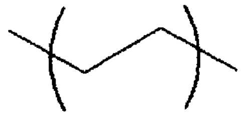

(E)

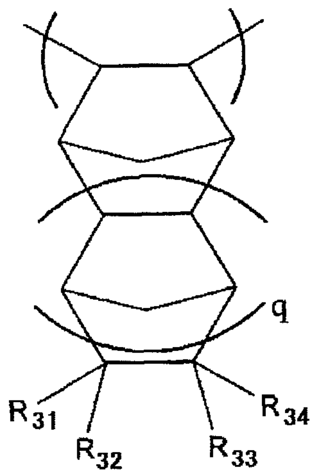

(F)

(In the foregoing formula (F), q is 0 or a positive integer; $R_{31}$ to $R_{34}$ are the same or different and are each selected from the group consisting of a hydrogen atom, a halogen atom and an aliphatic or aromatic hydrocarbon group having from 1 to 10 carbon atoms; $R_{31}$ and $R_{32}$, or $R_{33}$ and $R_{34}$ may be taken together to form an alkylidene group; and $R_{31}$ or $R_{32}$ and $R_{33}$ or $R_{34}$ may be taken together to form a ring, and the ring may have a double bond.)

[Advantages of the Invention]

The polarizing plate of the invention has a retardation function while having excellent environmental resistance because a protective film having a function as a retardation film, which is composed of a specified film material, is stuck to a polarizer with a specified adhesive.

In particular, in the case where a polycarbonate based resin having a fluorene ring and having a methyl group as a substituent on a benzene ring, or an amorphous polyolefin resin having a glass transition temperature in the range of from 100˚C to 180˚C, which is a copolymer composed of a cyclic olefin unit, is used as a material of a retardation film, and a specified urethane based adhesive is used, it is possible to provide a liquid crystal panel with a wide viewing angle, which is more satisfactory in adhesiveness and durability and which is good in contrast.

[Best Modes for Carrying Out the Invention]

The invention is hereunder described in detail.

[Polarizer]

The polarizer to be used in the invention is not particularly limited, and conventionally known PVA based polarizers can be used. For example, an iodine based polarizer in which iodine is adsorbed on and aligned in a PVA

based film; a dye based polarizer in which a dichroic dye is adsorbed on and aligned in a PVA based film; a polyene based polarizer in which such a film is subjected to a partial dehydration treatment; and the like are exemplified. As to the thickness thereof, for example, those of from about 5 to 50 μm can be used.

Examples of the PVA based film include a PVA film, a polyvinyl butyral film, a polyvinyl acetal film, a polyvinyl formal film, a poly(ethylene-vinyl acetate) copolymer saponified film, etc. However, it should not be construed that the invention is limited thereto.

[Polycarbonate based resin]

The polycarbonate based resin in the invention is a polyester of carbonic acid and a glycol or a dihydric phenol. An aromatic polycarbonate composed of, as constitutional units, carbonic acid and 2,2'-bis(4-hydroxyphenyl)-propane (commonly known as bisphenol A) is useful, but as a matter of course, it should not be construed that the invention is limited thereto. The polycarbonate based resin may be a homo- or copolymer polycarbonate composed of, as a monomer component, at least one kind of dihydric phenol selected from the group consisting of a 1,1-bis(4-hydroxyphenyl)-alkylcycloalkane, a 1,1-bis(3-substituted-4-hydroxyphenyl)-alkylcycloalkane, a 1,1-bis(3,5-substituted-4-hydroxyphenyl)-alkylcycloalkane and a 9,9-bis(4-hydroxyphenyl)fluorene; a mixture with a polycarbonate composed of, as monomer components, the foregoing dihydric phenol and bisphenol A; a copolymerization polycarbonate composed of, as monomer components, the foregoing dihydric phenol and bisphenol A; or the like.

Specific examples of the 1,1-bis(4-hydroxyphenyl)-alkylcycloalkane include 1-bis(4-hydroxyphenyl)-3,3,5-trimethylcyclohexane, 1,1-bis(4-hydroxyphenyl)-3,3-dimethyl-5,5-dimethylcyclohex ane, 1,1-bis(4-hydroxyphenyl)-3,3-dimethyl-5-methylcyclopentane, etc.

Examples of the 1,1-bis(3-substituted-4-hydroxyphenyl)-alkylcycloalkane include 1,1-bis (4-hydroxyphenyl) -alkylcycloalkanes which are substituted with an alkyl group having from 1 to 12 carbon atoms or a halogen group, for example, 1,1-bis(3-methyl-4-hydroxyphenyl)-3,3,5-trimethylcyclohexa ne, 1,1-bis(3-ethyl-4-hydroxyphenyl)-3,3-dimethyl-5,5'-dimethy lcyclohexane, 1,1-bis(3-chloro-4-hydroxyphenyl)-3,3-dimethyl-4-methylcyc lohexane, 1,1-bis(3-bromo-4-hydroxyphenyl)-3,3-dimethyl-5-methylcycl opentane, etc.

Examples of the 1,1-bis(3,5-substituted-4-hydroxyphenyl)-alkylcycloalkane include 1,1-bits (4-hydroxyphenyl) -alkylcycloalkanes which are substituted with an alkyl group having from 1 to 12 carbon atoms or a halogen group, for example, 1,1-bis(3-methyl-4-hydroxyphenyl)-3,3,5-trimethylcyclohexa ne, 1,1-bis(3,5-dichloro-4-hydroxyphenyl)-3,3-dimethyl-5-methy lcyclohexane, 1,1-bis(3-ethyl-5-methyl-4-hydroxyphenyl)-3,3,5-trimethylc yclohexane, 1,1-bis(3,5-dimethyl-4-hydroxyphenyl)-3,3,5-trimethylcyclo hexane, 1,1-bis(3,5-dimethyl-4-hydroxyphenyl)-3,3-dimethyl-5-methy lcyclopentane, etc.

Examples of the 9,9-bis(4-hydroxyphenyl)fluorene include 9,9-bis(4-hydroxyphenyl)fluorene, 9,9-bis(3-methyl-4-hydroxyphenyl)fluorene, 9,9-bis(3-ethyl-4-hydroxyphenyl)fluorene, etc.

In addition, as other bisphenol component, 2,2'-bis(4-hydroxyphenyl)propane (bisphenol A), 4,4'-(α-methylbenzylidene)bisphenol, bis(4-hydroxyphenyl)methane, 2,2'-bis(4-hydroxyphenyl)butane, 3,3'-bis(4-hydroxyphenyl)pentane, 4,4'-bis(4-hydroxyphenyl)heptane, 4,4'-bis(4-hydroxyphenyl)2,5-dimethylheptane, bis(4-hydroxyphenyl)methylphenylmethane, bis(4-hydroxyphenyl)diphenylmethane, 2,2'-bis(4-hydroxyphenyl)octane, bis (4-hydroxyphenyl) octane, bis(4-hydroxyphenyl)4-fluorophenylmethane, 2,2'-bis(3-fluoro-4-hydroxyphenyl)propane, bis(3,5-dimethyl-4-hydroxyphenyl)methane, 2,2'-bis(3,5-dimethyl-4-hydroxyphenyl)propane, bis(3,5-dimethyl-4-hydroxyphenyl)phenylethane, bis(3-methyl-4-hydroxyphenyl)diphenylmethane and the like may be used. These can be used singly or in admixture of two or more kinds thereof.

The polycarbonate based resin in the invention may contain, in addition to the foregoing bisphenol component, a polyester carbonate using a small amount of an aliphatic or aromatic dicarboxylic acid as a comonomer of the acid component. Examples of the aromatic dicarboxylic acid include, for example, terephthalic acid, isophthalic acid, p-xylene glycol, bis(4-hydroxyphenyl)-methane, 1,1'-bis(4-hydroxyphenyl)-ethane, 1,1'-bis(4-hydroxyphenyl)-butane, 2,2'-bis(4-hydroxyphenyl)-butane, etc. Of these, terephthalic acid and isophthalic acid are preferable.

A molecular weight of the polycarbonate based resin is preferably in the range of from 2,000 to 100, 000, more preferably from 5, 000 to 70,000, and further preferably from 7, 000 to 50,000 in terms of a viscosity average molecular weight. A specific viscosity as measured at 20°C in terms of a methylene chloride solution thereof having a concentration of 0.7 g/dL is preferably in the range of from 0.07 to 2.70, more preferably from 0.15 to 1.80, and further preferably from 0.20 to 1.30. One having a viscosity average molecular weight of less than 2, 000 is not suitable because a film to be obtained therefrom is brittle; and one having a viscosity average molecular weight exceeding 100,000 is not favorable because processing into a film is difficult.

The polycarbonate to be used in the invention is especially preferably a polycarbonate containing a repeating unit represented by the following formula (A) and a repeating unit represented by the following formula (B).

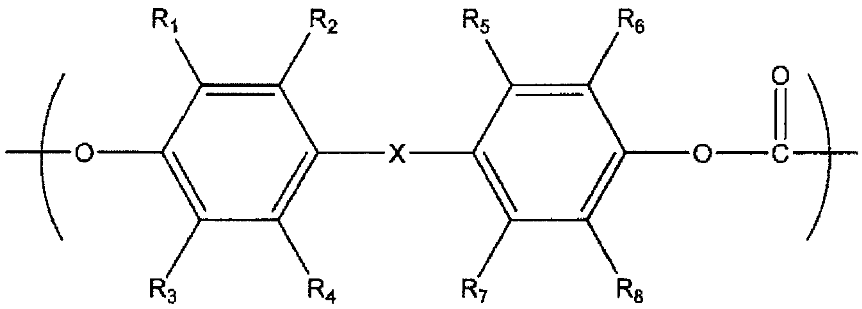

(A)

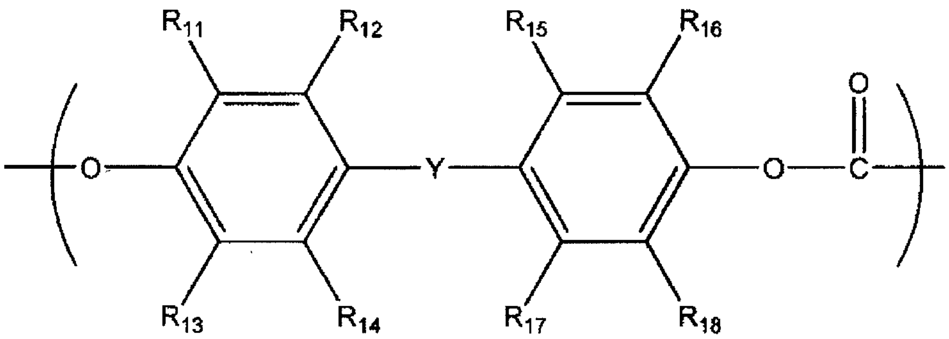

(B)

In the foregoing formula (A), $R_1$ to $R_8$ are each independently a hydrogen atom, a halogen atom or a hydrocarbon group having from 1 to 6 carbon atoms. Examples of the hydrocarbon group having from 1 to 6 carbon atoms include alkyl groups such as a methyl group and an ethyl group; and aryl groups such as a phenyl group.

X in the foregoing formula (A) is represented by the following formula (X).

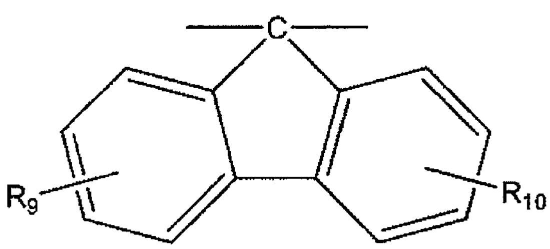

(X)

Here, $R_9$ and $R_{10}$ are each independently a hydrogen atom, a halogen atom or an alkyl group having from 1 to 3 carbon atoms. Examples of such an alkyl group include a methyl group, an ethyl group, etc.

In the foregoing formula (B), $R_{11}$ to $R_{18}$ are each independently selected from the group consisting of a hydrogen atom, a halogen atom and a hydrocarbon group having from 1 to 22 carbon atoms. Examples of such a hydrocarbon group include alkyl groups such as a methyl group and an ethyl group; and aryl groups such as a phenyl group.

Y in the foregoing formula (B) is selected from the group consisting of groups represented by the group (Y) of the following formulae.

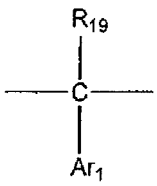 、 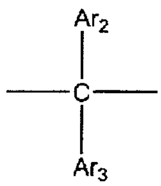 、 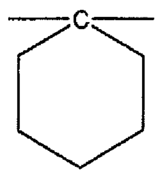 、 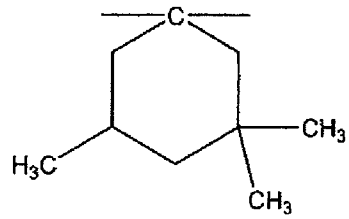 、 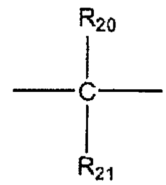 、

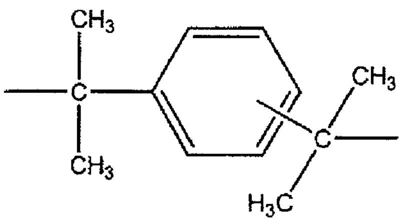 、 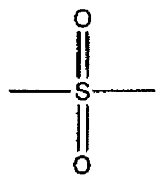 、 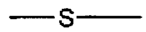 、 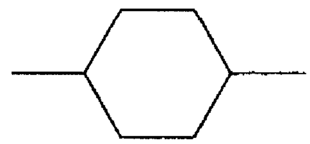 、

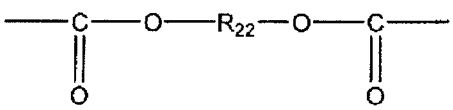 、 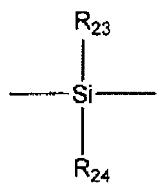 および 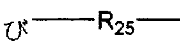 (Y)

Here, $R_{19}$ to $R_{21}$, $R_{23}$ and $R_{24}$ are each independently selected from the group consisting of a hydrogen atom, a halogen atom and a hydrocarbon group having from 1 to 22 carbon atoms. Examples of such a hydrocarbon group include alkyl groups such as a methyl group and an ethyl group; and aryl groups such as a phenyl group. $R_{22}$ and $R_{25}$ are each independently at least one kind of group selected from hydrocarbon groups having from 1 to 20 carbon atoms. Examples of such a hydrocarbon group include alkyl groups such as a methyl group and an ethyl group; and aryl groups such as a phenyl group. $Ar_1$ to $Ar_3$ are each independently selected from aryl groups having from 6 to 10 carbon atoms such as a phenyl group.

In the polycarbonate containing the repeating units represented by the foregoing formulae (A) to (B), the content of (A) is preferably from 10 to 95 % by mole of the whole on the basis of the total sum of the repeating units constituting the polycarbonate. In this polycarbonate, in the case where the content of (A) is less than 10 % by mole, birefringence of the polymer film is large so that it is difficult to obtain a film having uniform retardation properties. On the other hand, in the case where the content of (A) exceeds 95 % by mole of the whole, the film is easy to break and has brittle properties. It is preferable that more effectively, the content of the repeating unit (A) is from 20 to 93 % by mole; and that further effectively, the content of the repeating unit (A) is from 30 to 90 % by mole. Especially, it is suitable that the content of the repeating unit (A) is from 75 to 93 % by mole in an application required to have properties such that the optical anisotropy is negative; from 10 to 55 % by mole in an application required to have properties such that the shorter the wavelength, the larger the retardation value; from 55 to 75 % by mole in an application required to have properties such that the shorter the wavelength, the smaller the retardation value; from 40 to 60 % by mole in an application required to have properties such that the retardation value does not substantially change irrespectively of the wavelength; and from 65 to 80 % by mole in an application required to have properties such that the retardation value is not substantially generated, respectively.

The polycarbonate based resin to be used in the invention may be a copolymer singly or a blend. For example, a single kind of a copolymer may be used as it stands, or two or more kinds of copolymers having a different composition or molecular weight may be blended and used. Also, a blend of a copolymer and a homopolymers or a blend of homopolymers each other may be used. In case of a blend, though a compatible blend is preferable, even when the components are not completely compatible, if a refractive index is in conformity with each other, it is possible to suppress light scattering among the components, thereby enhancing the transparency.

Also, in case of a blend, the foregoing preferred composition or molecular weight refers to one in the whole of the blend. The foregoing molar ratio can be determined by, for example, a nuclear magnetic resonance (NMR) apparatus in the whole of a polycarbonate bulk constituting a polymer oriented film irrespectively of a copolymer or a blend.

A glass transition point temperature of the polycarbonate based resin is preferably in the range of from 120 to 290˚C, more preferably from 150 to 280˚C, further preferably from 160 to 270˚C, especially preferably from 170 to 260˚C, and most preferably from 180 to 250˚C. In the case where the glass transition point temperature is lower than 120˚C, the dimensional stability is poor, whereas in the case where it exceeds 290˚C, the temperature control of a stretching step is very difficult so that the production is difficult.

Also, the polycarbonate based resin may contain a thermal stabilizer, an antioxidant, an ultraviolet light absorber, a light stabilizer, a transparent nucleating agent, a permanent antistatic, a polymer modifier such as a fluorescent brightener or the like.

[Amorphous polyolefin resin]

The amorphous polyolefin resin to be used in the invention is an ethylene-cyclic olefin copolymer in which ethylene and norbornene undergo vinyl type polymerization and is a copolymer which is constituted of an ethylene repeating unit represented by the following formula (E) and a cyclic polyolefin unit represented by the following formula (F).

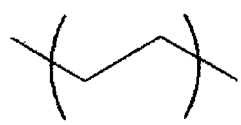

(E)

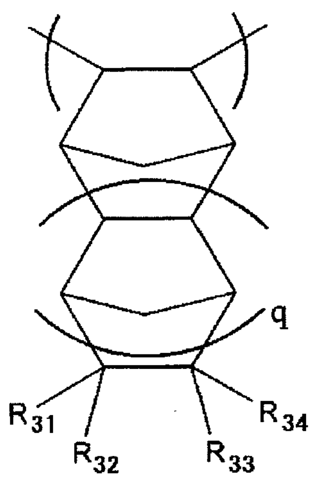

(F)

In the foregoing formula (F), q is 0 or a positive integer; $R_{31}$ to $R_{34}$ are the same or different and are each selected from the group consisting of a hydrogen atom, a halogen atom and an aliphatic or aromatic hydrocarbon group having from 1 to 10 carbon atoms; $R_{31}$ and $R_{32}$, or $R_{33}$ and $R_{34}$ may be taken together to form an alkylidene group; and $R_{31}$ or $R_{32}$ and $R_{33}$ or $R_{34}$ may be taken together to form a ring, and the ring may have a double bond.

In the foregoing formula (F), q is preferably 0 or 1; and $R_{31}$ to $R_{34}$ are each preferably a hydrogen atom, or $R_{31}$ or $R_{32}$ and $R_{33}$ or $R_{34}$ are preferably taken together to form an aliphatic ring. Specific examples of the cyclic olefin for forming the formula (F) include 2-norbornene, tetracyclo[4.4.0.12,5.17,10]-3-dodecene, tricyclo[4.3.0.12,5]-3-decene, tricyclo[4.4.0.12,5]-3-undecene, pentacyclo[6.5.13,6.02,7.09,12]-4-pentadecene, etc. Of these, 2-norbornene and tetracyclo[4.4.0.12,5.17,10]-3-dodecene are preferable; and 2-norbornene is more preferable. Also, such a cyclic olefin may be used singly or in combination of two or more kinds thereof.

In addition, in the invention, a glass transition temperature (Tg) of the amorphous polyolefin resin is in the range of from 100˚C to 180˚C. When Tg is lower than 100˚C, the thermal stability is poor, and therefore, such is not preferable;

and on the other hand, when Tg is higher than 180°C, the toughness of the film tends to be lowered, and the melt viscosity of the copolymer is too high so that the melt extrusion fabrication is difficult. Therefore, such is not preferable. The glass transition temperature is more preferably in the range of from 110°C to 170°C, and further preferably from 120°C to 160°C.

The glass transition temperature of the vinyl polymerization type copolymer is correlated with both the structure of the cyclic olefin and the composition ratio, and therefore, a preferred composition of the repeating units (E) and (F) varies depending upon the cyclic olefin to be used. In the invention, a molar ratio of (E) to (F) is in the range of from about 75/25 to 35/65. For example, in the case where the unit represented by the foregoing formula (F) is anorbornene unit, its molar ratio of (E) to (F) is preferably in the range of from 61/39 to 40/60, and more preferably in the range of from 57/43 to 46/54. Such a composition can be determined by the $^{13}$C-NMR measurement.

Also, in the invention, in addition to the repeating units represented by the foregoing formulae (E) and (F), a small amount of a repeating unit composed of other copolymerizable vinyl monomer may be contained in the range wherein the object of the invention is not hindered. Specific examples of such other vinyl monomer include units represented by the following formula (G):

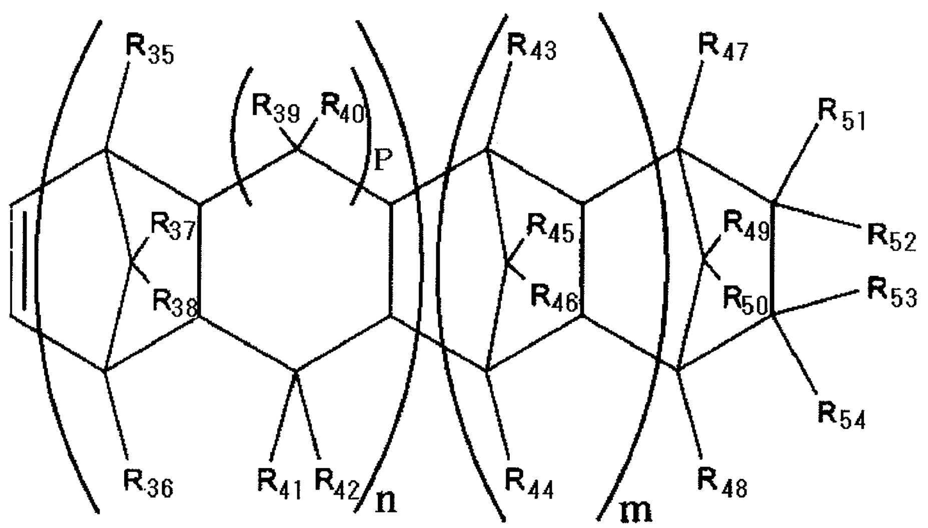

(G)

[in the formula (G) , n is 0 or 1; m is 0 or a positive integer; p is 0 or 1; $R_{35}$ to $R_{54}$ are the same or different and are each selected from the group consisting of a hydrogen atom, a halogen atom and a saturated or unsaturated aliphatic hydrocarbon group having from 1 to 12 carbon atoms; $R_{51}$ and $R_{52}$, or $R_{53}$ and $R_{54}$ may be taken together to form an alkylidene group; and $R_{51}$ or $R_{52}$ and $R_{53}$ or $R_{54}$ may be taken together to form a ring, and the ring may have a double bond]; α-olefins having from 3 to 18 carbon atoms such as propylene, 1-butene, 1-hexene, 4-methyl-1-pentene, 1-octene, 1-decene, 1-dodecene, 1-tetradecene, 1-hexadecene and 1-octadecene; cycloolefins such as cyclobutene, cyclopentene, cyclohexene, 3-methylcyclohexene and cyclooctene; and the like. Of these, α-olefins having from 3 to 18 carbon atoms can be used as a molecular weight modifier during the copolymerization, and 1-hexene can be especially favorably used. Such other vinyl monomer may be used singly or in combination of two or more kinds thereof. Also, the content of its repeating unit is preferably not more than 10 % by mole, and more preferably not more than 5 % by mole relative to the whole of the amorphous polyolefin resin.

In the amorphous polyolefin resin, as the bulkiness of the cyclic olefin component (F component) increases, birefringence tends to hardly reveal. From this viewpoint, for example, a norbornene component corresponding to the foregoing formula (F) wherein q is 0, and $R_{31}$ to $R_{34}$ are each H is more preferable than a tetracyclododecene component corresponding to the foregoing formula (F) wherein q is 1, and $R_{31}$ to $R_{34}$ are each H. Accordingly, in the invention, it is preferable to use an ethylene-norbornene copolymer in which all of the cyclic olefin units (F component) are a norbornene unit.

In general, in the ethylene-norbornene copolymer, a chain site of the norbornene component is present to some extent in any case, the degree of which, however, varies depending upon a polymerization method, a catalyst to be used, a composition and the like. As to the stereoregularityin of a two-chain site (hereinafter referred to as "NN dyad") of the norbornene component of a vinyl polymerization type, it is known that there are two kinds of stereoisomers including a meso type represented by the following formula (H) and a racemo type represented by the following formula (I).

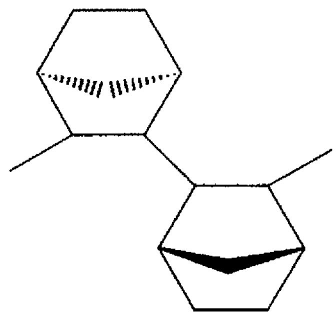

(H)

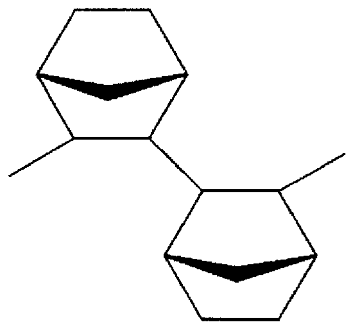

( I )

In the invention, in case of using the ethylene-norbornene copolymer, as to such stereoregularity, an existent ratio of the meso type and the racemo type is preferably [meso type] / [racemo type] > 4, and more preferably [meso type] / [racemo type] > 6. The higher this ratio is, the higher the revealability of birefringence is, and such is preferable. An upper limit of the ratio is not particularly limited. The stereoregularity (NN dyad stereoisomer) of the ethylene-norbornene copolymer can be determined by $^{13}$C-NMR and in the invention, refers to a value which is calculated in terms of [meso type]/[racemo type] = [peak area at 28.3 ppm of the $^{13}$C-NMR spectrum] / [peak area at 29.7 ppm of the $^{13}$C-NMR spectrum] in the $^{13}$C-NMR as measured using a deuteron-ortho-dichlorobenzene solvent. When this ratio is small as not more than 4, namely when the proportion of the racemo type is high, the resin is inferior in revealability of birefringence. As a matter of course, there may be the case where a desired retardation value is obtained by a measure such as thickening of the thickness of the film, increasing a stretch ratio, stretching at a low stretching temperature, etc., but such is not preferable from the viewpoints of thinning of the film and productivity.

Also, according to the analysis of $^{13}$C-NMR, an existent ratio (molar fraction) of the NN dyad relative to the amount of the whole norbornene component, namely what extent of a chain structure is formed by the norbornene component can be determined and in the invention, is preferably in the range of from 0.1 to 0.6. The "molar fraction" as referred to herein refers to a value which is calculated by [(peak area at 28.3 ppm of the $^{13}$C-NMR spectrum) + (peak area at 29.7 ppm of the $^{13}$C-NMR spectrum) ] / [peak area of one carbon atom of the whole norbornene component].

The ethylene-cyclic olefin copolymer to be preferably used in the invention can be synthesized using a publicly known vinyl type polymerization catalyst such as Ziegler-Natta catalysts and metallocene catalysts. Also, its molecular weight is preferably in the range of from 0.1 to 10 dL/g, and more preferably from 0.3 to 3 dL/g in terms of a reduced viscosity $\eta sp/c$ as measured in a Cyclohexane solution having a concentration of 1.2 g/dL at a temperature of 30°C. When the reduced viscosity $\eta sp/c$ is smaller than 0.1, the film is brittle, and therefore, such is not preferable; and when it is larger than 10, the melt viscosity is too high so that melt extrusion of the film is difficult.

The amorphous polyolefin resin to be used in the invention may be a copolymer singly or a blend. For example, a single kind of a copolymer may be used as it stands, or a blend of two or more kinds of copolymers having a different composition or molecular weight or a copolymer and other homopolymer may be blended and used. In case of a blend, the foregoing preferred composition or molecular weight refers to one of the whole of the blend. In case of a blend, though a compatible blend is preferable, even when the components are not completely compatible, if a refractive index among the components is in conformity with each other, it is possible to suppress light scattering among the components, thereby enhancing the transparency.

Also, the amorphous polyolefin resin may contain a thermal stabilizer, an antioxidant, an ultraviolet light absorber, a light stabilizer, a transparent nucleating agent, a permanent antistatic, a polymer modifier such as a fluorescent brightener or the like.

[Protective film]

The protective film of the invention is composed of the foregoing polycarbonate based resin or amorphous polyolefin resin and has a function as a retardation film. Accordingly, the protective film to be used in the invention is a film for protecting at least one surface of a polarizer which constitutes a polarizing plate and at the same time, a film with retardation properties while having a function as a retardation film (hereinafter sometimes referred to as "retardation film").

Here, it is preferable that the protective film has good transparency and has a haze of not more than 5 % and a total light transmittance of 85 % or more. There may be the case where the haze value is intentionally made high.

An in-plane retardation value (R value) and a retardation value in the thickness direction (K value) of the protective film are expressed by the following expressions (a) and (b), respectively.

$$R = (n_x - n_y) \times d \qquad (a)$$

$$K = ((n_x + n_y)/2 - n_z) \times d \qquad (b)$$

In the foregoing expressions, $n_x$, $n_y$ and $n_z$ are each a three-dimensional refractive index of the film and are a refractive index in the x-axis direction and a refractive index in the y-axis direction in the film plane and a refractive index in the z-axis direction vertical to the film, respectively. Also, d is a thickness (nm) of the film.

Namely, $n_x$, $n_y$ and $n_z$ are each an index expressing optical anisotropyof the film. Inparticular, incase of the protective film in the invention, $n_x$, $n_y$ and $n_z$ are defined as follows.

$n_x$: Maximum refractive index in the film plane

$n_y$: Refractive index in the azimuth perpendicular to the direction where the maximum refractive index in the film plane is exhibited

$n_z$: Refractive index in the normal direction of the film

In the invention, when the optical anisotropy of the film is considered to be of a refractive index ellipsoid, the three-dimensional refractive indexes are determined by a method for the determination using a publicly known expression of refractive index ellipsoid. Since the three-dimensional refractive indexes are dependent upon the wavelength of a light source to be used, it is preferable to define them in terms of the wavelength of a light source to be used. In the invention, in the case where the wavelength is not specified, values at 550 nm are employed.

In the protective film to be used in the invention, it is preferable that the following expressions (1) and/or (2) are satisfactory, and the R value and K value are properly chosen depending upon an application.

$$0 \leq R \leq 500 \text{ nm} \qquad (1)$$

$$-400 \leq K \leq 500 \text{ nm} \qquad (2)$$

For example, in case of bearing a viewing angle compensation function of an IPS liquid crystal, it is preferable that the following expressions (1-1) and/or (2-1) are satisfactory.

$$0 \leq R \leq 300 \text{ nm} \qquad (1\text{-}1)$$

$$-400 \leq K \leq 150 \text{ nm} \qquad (2\text{-}1)$$

For example, in case of bearing a viewing angle compensation function of a VA liquid crystal, it is preferable that the following expressions (1-2) and/or (2-2) are satisfactory.

$$30 \leq R \leq 200 \text{ nm} \qquad (1\text{-}2)$$

$$80 \leq K \leq 300 \text{ nm} \qquad (2\text{-}2)$$

For example, in case of bearing a function of a circular polarizing plate, it is preferable that the following expressions (1-3) and/or (2-3) are satisfactory.

$$100 \leq R \leq 170 \text{ nm} \qquad (1\text{-}3)$$

$$-150 \leq K \leq 90 \text{ nm} \qquad (2\text{-}3)$$

For example, in case of bearing a function to widen a viewing angle as a polarizing plate alone, it is preferable that the following expressions (1-4) and/or (2-4) are satisfactory.

$$100 \leq R \leq 300 \text{ nm} \qquad (1\text{-}4)$$

$$-150 \leq K \leq 150 \text{ nm} \qquad (2\text{-}4)$$

A thickness of the retardation film in the invention is in general not more than 500 μm, preferably from 1 to 300 μm, and especially preferably from 5 to 200 μm.

[Production method of protective film]

The production method of the protective film to be used in the invention is not particularly limited, and a method capable of imparting a function as a retardation film by using, as a material, the foregoing polycarbonate resin or amorphous polyolef in resin. For example, a method in which an unstretched film of the foregoing polycarbonate resin or amorphous polyolefin resin is prepared and subsequently stretched, thereby imparting a retardation; a method in which an unstretched film of the foregoing polycarbonate resin or amorphous polyolef in resin is prepared, and an optically anisotropic layer is subsequently provided on the film surface, thereby imparting a retardation; and the like can be exemplified.

In the case where an unstretched film of the foregoing polycarbonate resin or amorphous polyolefin resin is prepared and subsequently stretched, thereby imparting a retardation, an unstretched film is prepared by employing an already known method and subsequently carrying out stretching. Examples of the method for preparing an unstretched film include a melt fabrication method, a solution fabrication method, a calendering method, an injection molding method, etc. As an example of the stretching treatment for bearing retardation properties on the obtained unstretched film corresponding to the purpose, there are exemplified continuous stretching methods such as a roll longitudinal uniaxial stretching method utilizing a difference in roll rate; a tenter lateral uniaxial stretching method of grasping an end of the film in a width direction by a pin or a clip and widening the grasped portion in the width direction; a tenter oblique uniaxial stretching method utilizing a difference in rate of a grasped portion in a film flow direction and/or a difference in traveling distance; a special Z-axis stretching method of applying a tensile stress in the thickness direction; a special Z-axis stretching method of applying a compression stress in the plane; and the like. In addition, there are exemplified a sequential biaxial stretching method of repeating the foregoing uniaxial stretching method; a simultaneous biaxial stretching method of widening a tenter with a difference in rate in a film flow direction in a width direction; a multistage stretching

method of repeating such stretching several times; and the like.

While some examples of the stretching method for obtaining a film capable of imparting a retardation have been exemplified, it should not be construed that the stretching method for obtaining the protective film of the invent ion is limited thereto. Above all, the continuous stretching method is preferable from the viewpoint of productivity, but it is not especially required that the method be the continuous stretching method.

Also, in the case where an unstretched film of the foregoing polycarbonate resin or amorphous polyolefin resin is prepared, and an optically anisotropic layer is subsequently provided on the film surface, thereby imparting a retardation, the optically anisotropic layer is not particularly limited, and for example, a method in which an oriented layer is formed directly or after providing a subbing layer on the film, and a liquid crystalline compound is oriented and solidified thereon, thereby forming the optically anisotropic layer is exemplified. Alternatively, an oriented layer can be provided singly as the optically anisotropic layer. In the invention, the optically anisotropic layer is provided on the surface onto which a polarizer is not bonded.

A thickness of the optically anisotropic layer varies depending upon the size of birefringence of the liquid crystal compound constituting it and the orientation state of the liquid crystal compound. However, for the purpose of improving viewing angle properties of a liquid crystal display device, in general, it is preferably from 0.1 to 10 μm, and more preferably from 0.2 to 5 μm. Also, the optically anisotropic layer can be provided in a plural number of layers relative to the single film.

The oriented layer is disposed on the film and lies in adjacent to the layer of a liquid crystalline compound, thereby playing a role to orient the liquid crystal compound. As a specific material for constituting the oriented layer, for example, polyimides, polyamide-imides, polyamides, polyetherimides, polyetheretherketones, polyetherketones, polyketone sulfides, polyether sulfones, polysulfones, polyphenylene sulfides, polyphenylene oxides, polyethylene terephthalate, polybutylene terephthalate, polyethylene naphthalate, polyacetal, polycarbonates, polyallylates, acrylic resins, polyvinyl alcohol, polypropylene, polyvinylpyrrolidone, cellulose based plastics, epoxy resins, phenol resins and the like are exemplified. However, it should not be construed that the invention is limited thereto.

For the orientation treatment, known methods can be employed, and a treatment method which is widely employed as a liquid crystal orientation step of LCD, such as a rubbing treatment, etc. , can be utilized. Also, a known photo-oriented layer can be used.

The liquid crystalline compound is not particularly limited so far as it can be oriented. For example, discotic compounds, rod-shaped liquid crystal compounds and the like can be exemplified, and a mixture of several kinds of liquid crystalline compounds may be used. In the liquid crystalline compound, the orientation can be fixed by a chemical reaction or a treatment utilizing a temperature difference. In the case where a solution containing a liquid crystal compound and an organic solvent is prepared, and the solution is then coated and dried to prepare an optically anisotropic layer, even when not heated at a liquid crystal transition temperature or higher, it is possible to achieve the orientation treatment of the liquid crystal compound.

In the case where the solution containing a liquid crystal compound is coated on the surface of an unstretched film, after coating, the solvent is dried and removed, whereby a liquid crystal layer having a uniform thickness can be obtained. The liquid crystal layer causes a chemical reaction by the action of heat or light energy or a combination of heat and light energy, thereby fixing the orientation of the liquid crystal.

Also, in the case where the liquid crystalline compound is a polymer liquid crystal, the orientation of the liquid crystal using a curing reaction due to a chemical reaction may not be fixed. For example, by heat treating a polymer liquid crystal at a glass transition point temperature or higher and then cooling to not higher than the glass transition temperature, the orientation can be fixed. In the case where the glass transition point temperature of the polymer liquid crystal is higher than a heat resistant temperature of the film, the orientation can be achieved by disposing the foregoing oriented film on the film, coating a polymer liquid crystal and then heating at a glass transition point temperature of the polymer liquid crystal or higher. Also, a protective film can be prepared by orienting and fixing the polymer liquid crystal on other support and then transferring it onto the film using an adhesive.

In order to bear retardation properties depending upon the purpose, while a method for performing a stretching treatment and a method for providing an optically anisotropic layer have been exemplified, in the invention, thesemethodsmaybecombined and employed. In particular, in the case where it is intended to bear different wavelength dependency on an in-plane retardation and a retardation in the thickness direction, respectively, such can be achieved by providing an optically anisotropic layer having different retardation wavelength dependency from the retardation film. Alternatively, in the case where a stretching treatment with poor productivity, such as special Z-axis stretching, is required, by providing an optically anisotropic layer on a retardation film having been subjected to a stretching treatment with good productivity, it is possible to bear desired retardationproperties as a whole. For example, in an IPS liquid crystal, an optically anisotropic layer such that the retardation in the thickness direction is negative is provided on a retardation film having been subj ected to a uniaxial stretching treatment.

On the surface of the protective film in the invention onto which a polarizer is not bonded, a hard coat layer may be provided, or an antiref lection treatment or a treatment which is aimed at sticking prevention, diffusion or antiglare

may be applied.

[Polyurethane-containing adhesive] The polarizing plate of the invention has an adhesive layer formed of a polyurethane-containing adhesive between the foregoing protective film and polarizer.

As the polyurethane to be used in the adhesive layer of the invention, one having an ether bond in a principal chain thereof is suitable from the viewpoint of keeping adhesive strength under resistance to heat or resistance to moist heat after the adhesion.

In general, the polyurethane is obtained through a reaction between a polyol component and an isocyanate component. In the polyurethane constituting the adhesive of the invention, each of the polyol component and the isocyanate component may be used singly or in combination of two or more kinds thereof. Also, the polyurethane to be used in the invention is not particularly limited with respect to aproductionmethod thereof and can be produced by a publicly known method such as a one-shot method and a prepolymer method.

The polyol component which is a first component as referred to herein is a compound containing two or more hydroxyl groups as an active hydrogen compound and is not particularly limited in the invention so far as it is a publicly known compound to be used for the usual production of a polyurethane.

For the purpose of introducing an ether bond into the principal chain of the obtained polyurethane, there is exemplified a method of using a polyether based polyol as the polyol component. Examples of the polyether based polyol include polyether polyols obtained through addition polymerization of one or two or more kinds of ethylene oxide, propylene oxide, butylene oxide, etc. on one or two or more kinds of a polyhydric alcohol having a relatively low molecular weight; polytetramethylene ether glycol (PTMEG) obtained through ring-opening polymerization of tetrahydrofuran; polyether-ester polyols obtained through a reaction of a polyester chain with an end of a polyether polyol in a block form; modified products of the foregoing polyether polyols; and the like for example. Of these, it is preferable to use a propylene glycol derivative or a tetraethylene glycol derivative.

Here, examples of the polyhydric alcohol having a relatively low molecular weight include dihydric alcohols such as ethylene glycol, diethylene glycol, propylene glycol, dipropylene glycol, 1,3-butanediol, 1,4-butanediol, 4,4'-dihydroxyphenylpropane and 4,4'-dihydroxymethylmethane; trihydric alcohols such as glycerin, 1,1,1-trimethylolpropane and 1,2,5-hexatriol; and tetrahydric or polyhydric alcohols such as pentaerythritol, glucose, sucrose and sorbitol, for example.

Also, in producing the polyurethane to be used in the adhesive layer of the invention, it is possible to use a polyester polyol as the polyol component. By using the polyester polyol, it is possible to introduce an ester bond in the principal chain of the obtained polyurethane. Here, examples of the polyester polyol include, in addition to polyesters obtained through a dehydration condensation reaction between a glycol (component) and an acid (component), polyesters obtained through a ring-openingpolymerization reaction of a cyclic ester compound such as ε-caprolactone; copolymerization polyesters thereof; and the like.

The isocyanate component which is a second component is not particularly limited so far as it is a compound having two or more of NCO. Examples thereof include toluene diisocyanate (TDI), 4,4'-diphenylmethane diisocyanate (MDI), 1,5-naphthalene diisocyanate (NDI), tolidine diisocyanate (TODI), HDI (hexamethylene diisocyanate), IPDI (isophorone diisocyanate), p-phenylene diisocyanate, trans-cyclohexane 1,4-diisocyanate, xylene diisocyanate (XDI), hydrogenated XDI, hydrogenatedMDI, lysine diisocyanate (LDI), tetramethylxylene diisocyanate (TMXDI), lysine ester triisocyanate, 1,6,11-undecane triisocyanate, 1,8-diisocyanato-4-isocyanatomethyloctane, 1,3,6-hexamethylene triisocyanate, bicycloheptane triisocyanate, trimethylhexamethylene triisocyanate, etc, for example. Of these, toluene diisocyanate (TDI), 4,4'-diphenylmethane diisocyanate (MDI) and IPDI (isophorone diisocyanate) are preferable.

As the polyurethane which forms the adhesive layer of the invention, in addition to the foregoing polyol component and isocyanate component, a chain extender component may be contained as a constitutional component. The chain extender component is not particularly limited, and conventionally publicly known chain extenders can be used.

From the viewpoint of the matter that the introduction of explosion-proof equipment is not required, the polyurethane-containing adhesive to be used in the adhesive layer of the invention is preferably aqueous (water-soluble). In that case, though the solids content is not particularly limited, it is preferably from 0.01 to 60 parts by mass, more preferably from 10 to 50 parts by mass, and further preferably from 25 to 50 parts by mass based on 100 parts by mass of an aqueous solution of the adhesive. In the case where the solids content is less than 0.01 parts by mass, the adhesiveness is lowered; and in the case where it is more than 60 parts by mass, the viscosity of the adhesive is high so that whenprocess passing properties are taken into consideration, such is not preferable.

Though the polyurethane to be used in the adhesive layer of the invention can be used singly as the adhesive, from the viewpoint of enhancing the adhesive strength, it is preferable to use it together with a crosslinking agent such as epoxy based crosslinking agents and isocyanate based crosslinking agents. (A product obtained through a reaction of a polyurethane with a crosslinking agent will be hereinafter sometimes referred to as "urethane based adhesive".) In the polarizing plate of the invention, the polarizer and the protective film are bonded and formed via the foregoing polyurethane-containing adhesive layer, preferably the urethane based adhesive layer.

The epoxybased crosslinking agent is a crosslinking agent containing a glycidyloxy group and has a group

which should be named a 2,3-epoxypropoxy group from the purely chemical standpoint. In the invention, from the viewpoints of the matters that since flexibility can be imparted, peeling to be caused due to breakage can be suppressed and that coloration is scarcely caused, it is especially preferable to use an epoxy based crosslinking agent having an ether bond. As the epoxy based crosslinking agent, those having at least two glycidyloxy groups in a molecule thereof are preferable. Examples thereof include polyethylene glycol diglycidyl ether, polypropylene glycol diglycidyl ether, polytetramethylene glycol diglycidyl ether, neopentyl glycol diglycidyl ether, diglycerin diglycidyl ether, ethylene glycol diglycidyl ether, propylene glycol diglycidyl ether, 1,4-butanediol diglycidyl ether, 1,6-hexanediol diglycidyl ether, bisphenol A diglycidyl ether, bisphenol F diglycidyl ether, resorcin diglycidyl ether, glycerin triglycidyl ether, trimethylolpropane triglycidyl ether, pentaerythritol polyglycidyl ether, sorbitol polyglycidyl ether, sorbitan polyglycidyl ether, polyglycerol polyglycidyl ether, etc.

The isocyanate based crosslinking agent is a compound having at least two isocyanate groups in a molecule thereof. Specific examples thereof include 2,4-tolylene diisocyanate, phenylene diisocyanate, 4,4'-diphenylmethane diisocyanate, 1,6-hexamethylene diisocyanate, isophorone diisocyanate, etc, for example. Also, adducts formed when such a monomer is added to a polyhydric alcohol such as ethylene glycol, propylene glycol, 1,3-propanediol, 1,3-butanediol, 1,4-butanediol, 1,5-pentanediol, 3-methyl-1,5-pentanediol, 1,6-hexanediol, neopentyl glycol, diethylene glycol, triethylene glycol, tetraethylene glycol, polyethylene glycol (molecular weight: 300 to 6,000), dipropylene glycol, tripropylene glycol, 2,2-diethyl-1,3-propanediol, 2-butyl-2-ethyl-1,3-propanediol, 2-pentyl-2-propyl-1,3-propanediol, 2-butyl-2-hexyl-1,3-propanediol, 2-ethyl-1,3,hexanediol, bishydroxyethoxybenzene, 1,4-cyclohexanediol, 1,4-cyclohexanedimethanol and trimethylolpropane; isocyanurates formed when three diisocyanate molecules are reacted with a portion of one-terminal isocyanate group of each of them; polyisocyanate modified products formed when three diisocyanate molecules cause hydration or decarboxylation in a portion of one-terminal isocyanate group of each of them, such as bullets; and the like may be used.

Also, from the viewpoints of an enhancement of crosslinking efficiency and an enhancement of compatibility with the polarizer, it is preferable that the adhesive to be used in the adhesive layer of the invention contains polyvinyl alcohol or a derivative thereof together with the foregoing polyurethane. The polyvinyl alcohol or its derivative is used in a form of an aqueous solution thereof. The polyvinyl alcohol or its derivative is not particularly limited, and examples thereof include, in addition to a vinyl alcohol homopolymer obtained through a saponification treatment of polyvinyl acetate which is a homopolymers of vinyl acetate, vinyl alcohol based copolymers obtained through a saponification treatment of a copolymer of vinyl acetate andothermonomer copolymerizable therewith; and modified polyvinyl alcohol based polymers obtained by further partiallymodifying hydroxyl groups thereof, for example, acetoacetyl group-modified polyvinyl alcohol obtained through a reaction of a saponified material of a homopolymer or copolymer of vinyl acetate with a diketene, etc. Above all, in the invention, it is preferable to use a vinyl alcohol based copolymer.

The copolymer of vinyl acetate and other monomer is mainly composed of vinyl acetate, and a copolymerization proportion of the both is from about 70 to 99. 9 % by mole for vinyl acetate and from about 0.1 to 30% by mole for other monomer, respectively. Examples of other monomer to be copolymerized with vinyl acetate include unsaturated carboxylic acids and salts thereof, acrylic acid esters, linear olefins, vinyl ethers, unsaturated nitriles, vinyl halides, allyl compounds, vinylsilyl compounds, vinyl group-containing aromatic compounds, etc. Of these, copolymers obtained through copolymerization with an unsaturated carboxylic acid or a salt thereof are preferable. Accordingly, as the polyvinyl alcohol or its derivative which constitutes the adhesive to be used in the adhesive layer of the invention is preferably a saponified material of a copolymer of vinyl acetate and a carboxyl group-containing monomer, namely carboxyl group-modified polyvinyl alcohol. The "carboxyl group" as referred to in this description refers to a concept including -COOH and a salt thereof.

A molecular weight of polyvinyl alcohol or its derivative is preferably from about 10,000 to 1,000,000, more preferably from 20,000 to 400,000, and further preferably from 40,000 to 120,000. In dissolving such polyvinyl alcohol or its derivative in water to form an adhesive, a concentration of polyvinyl alcohol or its derivative is not limited, and for example, a mass ratio of polyvinyl alcohol or its derivative to water is preferably from about 0.1/100 to 10/100, and more preferably from 1/100 to 5/100.

In the invention, a mixture of a urethane based adhesive and polyvinyl alcohol or its derivative can also be formed into an adhesive. In that case, it is preferable that a proportion of the respective constitutional materials is from 5 to 30 parts by mass for the crosslinking agent and from about 1 to 100 parts by mass in terms of solids content for polyvinyl alcohol or its derivative, respectively based on 100 parts by mass of the solids of a polyurethane. The solids content of polyvinyl alcohol or its derivative is more preferably from 1 to 30 parts by mass, and further preferably from 5 to 20 parts by mass based on 100 parts by mass of the solids of the polyurethane based adhesive.

[Preparation method of polarizing plate]

In the polarizing plate of the invention, a protective film is provided on at least one surface of a polarizer via an adhesive layer to be formed of a polyurethane-containing adhesive. Any film may be provided on the opposite side

of the protective film.

A thickness of such a polarizing plate is usually from 40 to 250 μm. Since the polarizing plate of the invention has a retardation function, the number of members and the man-hour of works can be reduced. In its turn, it is possible to realize a further reduction in costs of the members of a liquid crystal display device, and moreover, it is possible to contribute to realization of thinning as a whole.

In the polarizing plate of the invention, sticking to a liquid crystal panel is carried out using a pressure-sensitive adhesive layer. Also, for the purpose of preventing staining of the pressure-sensitive layer from occurring or the like, a form inwhicha release film is temporarily bonded and protected on the surface is frequently taken.

As the release film of the pressure-sensitive layer, conventionally publicly known release films obtained by subj ecting an appropriate thin material, for example, a plastic film, a rubber sheet, paper, a cloth, a non-woven fabric, a net, an expanded sheet or a metal foil, or a laminate thereof, etc. to a coating treatment with an appropriate release agent such as silicone based, long-chain alkyl based, fluorine based or molybdenum sulfide release agents, if desired can be properly used.

[Examples]

The invention is specifically described below with reference to the Examples, but it should not be construed that the invention is limited thereto.

<Measurement and evaluation>

Characteristic values of materials described in this description and the like are those obtained in the following evaluation methods.

(1) Measurement of in-plane retardation value (R value) and retardation value in the thickness direction (K value):

An in-plane retardation value (R value) and a retardation value in the thickness direction (K value) were measured by a spectral ellipsometer (a trade name: M150, manufactured by JASCO Corporation). The R value was measured in a state that incident light was orthogonal to the surface of a retardation film. Also, the K value was determined by varying an angle between incident light and the film surface, measuring a retardation value at each angle and calculating $n_x$, $n_y$ and $n_z$ as three-dimensional refractive indexes by curve fitting using a publiclyknown refractive index ellipsoid formula. On that occasion, though an average refractive index n is required as a separate parameter, a value measured by an Abbe's refractometer (a trade name: Abbe's Refractometer 2-T, manufactured by Atago Co., Ltd.) was used for this.

(2) Measurement of glass transition point temperature:

A glass transition point temperature (Tg) was measured by a differential scanning calorimeter (a trade name: DSC2920 Modulated DSC, manufactured by TA Instruments). The measurement was carried out in a flake or chip state after polymerization of a polymer but not after film molding.

(3) Total light transmittance and haze value of film:

The measurement was carried out using a turbidimeter (Model: NDH-2000 Type, manufactured by Nippon Denshoku Industries Co., Ltd.).

(4) Thickness of film:

The measurement was carried out using an electronic micro film thickness meter (Anritsu Corporation).

(5) Evaluation of polarizing plate:

[Evaluation of adhesiveness of polarizing plate]

As to the prepared polarizing plate, a protective (retardation) film was peeled away from the polarizing plate using a tension meter (a trade name: FGM-2, manufactured by Nidec-Shimpo Corporation). Evaluation criteria are shown below.

○: The polarizing plate is broken during peeling so that the measurement of peel strength cannot be achieved (the adhesiveness is good).

×: Peeling can be achieved (the adhesiveness is insufficient).

[Evaluation of environmental resistance of polarizing plate]

(Evaluation of change in degree of polarization)

As to the prepared polarizing plate, a degree of polarization was measured using a spectrophotometer (a trade name: U-4000, manufactured by Hitachi, Ltd.). Subsequently, the polarizing plate was kept in a dry environment at 80°C and an environment at 60°C and 90 % RH, respectively for 1,000 hours, and thereafter, a degree of polarization was measured, thereby determining a change in degree of polarization before and after keeping. Evaluation criteria of the obtained results are shown below.
○: The change in degree of polarization falls within 1 % (the environmental resistance is good).
×: The change in degree of polarization is more than 1 % (the deterioration is observed).

(Evaluation of change in dimension)

As to the prepared polarizing plate, a dimension was measured using a ruler. Subsequently, the polarizing plate was kept in a dry environment at 80°C and an environment at 60°C and 90 % RH, respectively for 1,000 hours, and thereafter, a dimension was measured, thereby determining a change in dimension before and after keeping. A distance between reference points on a protective film of a polarizer was taken as the dimension. Evaluation criteria of the obtained results are shown below.
○: The change in dimension falls within 0.5 % (the environmental resistance is good).
×: The change in dimension is more than 0.5 % (the deterioration is observed).

(Evaluation of change in retardation)

As to the prepared polarizing plate, an in-plane retardation value (R value) was measured in the same manner as in the foregoing measurement of an in-plane retardation value (R value) by a spectral ellipsometer (a trade name: M150, manufactured by JASCO Corporation). Subsequently, the polarizing plate was kept in a dry environment at 80°C and an environment at 60°C and 90 % RH, respectively for 1,000 hours, and thereafter, an in-plane retardation value (R value) was measured, thereby determining a change in retardation before and after keeping. Evaluation criteria of the obtained results are shown below.
○: The change in retardation falls within 5 % (the environmental resistance is good).
×: The change in retardation is more than 5 % (the deterioration is observed).

(Evaluation of deterioration of adhesiveness)

The prepared polarizing plate was kept in a dry environment at 80°C and an environment at 60°C and 90 % RH, respectively for 1,000 hours, and thereafter, a protective (retardation) film was peeled away from the polarizing plate. Evaluation criteria were the same as those in the foregoing evaluation of adhesiveness.

<Monomer of polycarbonate>

Structures of monomers of the polycarbonate used in each of the Examples and Comparative Examples are shown below.

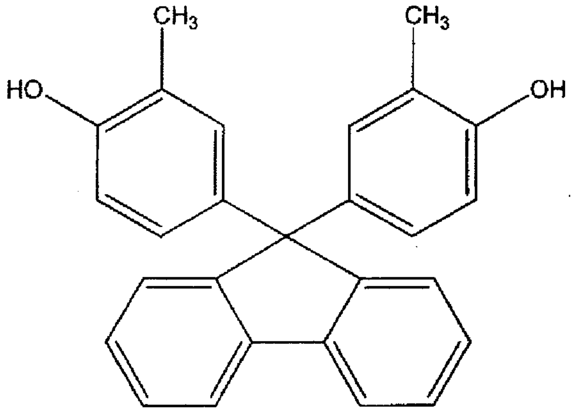

(C)

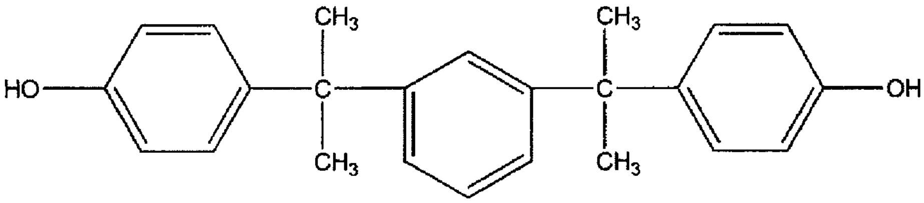

(D)

<Example 1>

(a) Preparation of polarizer:

A polyvinyl alcohol film having a thickness of 120 μm was dipped in an aqueous solution containing 1 part of iodine, 2 parts of potassium iodide and 4 parts of boric acid and stretched 4 times at 50°C, thereby obtaining a polarizer. On one surface of the obtained polarizer, a PVA based adhesive was coated, on the surface of which was then stuck a triacetyl cellulose film having been subjected to a saponification treatment and having a thickness of 50 μm. The obtained polarizer film is named a TAC-less film.

(b) Preparation of protective (retardation) film:

In a reaction tank equipped with a stirrer, a thermometer and a reflux condenser, a sodium hydroxide aqueous solution and ion exchanged water were charged, the monomers (C) and (D) having the foregoing structures in a molar ratio of 85/15 were then dissolved therein, and a small amount of a hydrosulfite was further added. Next, methylene chloride was added thereto, and phosgene was blown at 20°C over about 60 minutes. Subsequently, p-tert-butylphenol was added to achieve emulsification, triethylamine was then added, and the mixture was stirred at 30°C for about 3 hours, followed by finishing the reaction. After completion of the reaction, an organic phase was collected by separation, and the methylene chloride was vaporized to obtain a polycarbonate copolymer. A composition ratio of the obtained copolymer was substantially equal to the charged amount ratio of the monomers. Also, a glass transition point temperature of this copolymerization polycarbonate was 216°C.

The obtained copolymerization polycarbonate was dissolved in methylene chloride, thereby preparing an 18 % by weight dope solution. This dope solution was cast on a steel drum, continuously stripped off and dried to prepare a film. The obtained film was stretched 1.6 times at 220°C in the machine direction, thereby obtaining a protective (retardation) film. The obtained protective (retardation) film had retardation values of R = 90 nm and K = -45 nm, a total light transmittance of 89.9 %, a haze of 0.2 % and a thickness of 80 μm.

(c) Preparation of polyurethane-containing adhesive:

A polyurethane-containing adhesive was prepared by blending 100 parts of "ADW-615" (polyether polyurethane;

an aqueous solution having a solids content of 40 %), manufactured by Toyo-Morton, Ltd. with, as a crosslinking agent, 11.1 parts of "CATEP-5" (goods having 100 % of an active component), manufacturedbyToyo-Morton, Ltd., whichisanepoxybasedcuring agent.

One surface of the foregoing protective (retardation) film was subjected to a corona treatment; the polyurethane-containing adhesive as prepared above (thickness: 4 μm) was applied between the surface having been subjected to a corona treatment and the triacetyl cellulose film-free surface of the foregoing TAC-less film; and the resultant was passed between nip rollers under a pressure of from about 0.2 to 0.3 MPa and then dried at 80˚C for 10 minutes, thereby obtaining a polarizing plate (thickness: 240 μm).

As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1,000 hours, good results were obtained in all of the change in degree of polarization, the change in dimension, the change in retardation and the deterioration of adhesiveness.

Polarizing plates on the both sides of a commercially available transmission IPS liquid crystal panel were peeled off, and the polarizing plate obtained in this Example was stuck on each of the both sides of the liquid crystal cell via the pressure-sensitive adhesive such that it was disposed on the side of the liquid crystal cell, thereby obtaining a liquid crystal panel. As a result of confirming a display screen of the obtained liquid crystal panel, it had good contrast and wide viewing angle.

<Example 2>

A polarizing plate was obtained in the same manner as in Example 1, except that the polyurethane-containing adhesive was prepared by blending 100 parts of "ADW-615" (polyether polyurethane; an aqueous solution having a solids content of 40 %), manufactured by Toyo-Morton, Ltd. with 11.1 parts of "CATRT-34" (goods having 100 % of an active component), manufactured by Toyo-Morton, Ltd. , which is an isocyanate based curing agent.

As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1,000 hours, good results were obtained in all of the change in degree of polarization, the change in dimension, the change in retardation and the deterioration of adhesiveness.

Polarizing plates on the both sides of a commercially available transmission IPS liquid crystal panel were peeled off, and the polarizing plate obtained in this Example was stuck on one side of the liquid crystal cell via the pressure-sensitive adhesive such that it was disposed on the side of the liquid crystal cell, while sticking HLC2-5618,manufactured by Sanritz Corporation on the opposite side, thereby obtaining a liquid crystal panel. As a result of confirming a display screen of the obtained liquid crystal panel, it had good contrast and wide viewing angle.

<Example 3>

A polarizing plate was obtained in the same manner as in Example 1, except that the polyurethane-containing adhesive was prepared by blending 100 parts of "ADW-615" (polyether polyurethane; an aqueous solution having a solids content of 40 %), manufactured by Toyo-Morton, Ltd. with 11.1 parts of "TDW4575B" (goods having 100 % of an active component), manufactured by Toyo-Morton, Ltd. , which is an isocyanate based curing agent.

As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1,000 hours, good results were obtained in all of the change in degree of polarization, the change in dimension, the change in retardation and the deterioration of adhesiveness.

Using the obtained polarizing plate, a liquid crystal panel was obtained in the same manner as in Example 1. As a result of confirming a display screen of the obtained liquid crystal panel, it had good contrast and wide viewing angle.

<Example 4>

A polarizing plate was obtained in the same manner as in Example 1, except that the polyurethane-containing adhesive was prepared by blending 100 parts of "MDW-740" (polyester polyurethane; an aqueous solution having a solids content of 40 %), manufactured by Toyo-Morton, Ltd. with 11.1 parts of "CATEP-5" (goods having 100 % of an

active component), manufacturedbyToyo-Morton, Ltd., whichisanepoxybasedcuring agent.

As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1,000 hours, good results were obtained in all of the change in degree of polarization, the change in dimension, the change in retardation and the deterioration of adhesiveness.

Using the obtained polarizing plate, a liquid crystal panel was obtained in the same manner as in Example 1. As a result of confirming a display screen of the obtained liquid crystal panel, it had good contrast and wide viewing angle.

<Example 5>

A polarizing plate was obtained in the same manner as in Example 1, except that the polyurethane-containing adhesive was prepared by blending 100 parts of "MDW-740" (polyester polyurethane; an aqueous solution having a solids content of 40 %), manufactured by Toyo-Morton, Ltd. with 11.1 parts of "CATRT-34" (goods having 100 % of an active component), manufactured by Toyo-Morton, Ltd. , which is an isocyanate based curing agent.

As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1,000 hours, good results were obtained in all of the change in degree of polarization, the change in dimension, the change in retardation and the deterioration of adhesiveness.

Using the obtained polarizing plate, a liquid crystal panel was obtained in the same manner as in Example 1. As a result of confirming a display screen of the obtained liquid crystal panel, it had good contrast and wide viewing angle.

<Example 6>

A polarizing plate was obtained in the same manner as in Example 1, except that the polyurethane-containing adhesive was prepared by blending 100 parts of "MDW-740" (polyester polyurethane; an aqueous solution having a solids content of 40 %), manufactured by Toyo-Morton, Ltd. with 11.1 parts of "TDW4575B" (goods having 100 % of an active component), manufactured by Toyo-Morton, Ltd. , which is an isocyanate based curing agent.

As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1, 000 hours, good results were obtained in all of the change in degree of polarization, the change in dimension, the change in retardation and the deterioration of adhesiveness.

Using the obtained polarizing plate, a liquid crystal panel was obtained in the same manner as in Example 1. As a result of confirming a display screen of the obtained liquid crystal panel, it had good contrast and wide viewing angle.

<Example 7>

A polarizing plate was obtained in the same manner as in Example 1, except that the polyurethane-containing adhesive was prepared by blending 100 parts of "TDW4575A" (polyether polyurethane; an aqueous solution having a solids content of 40 %), manufactured by Toyo-Morton, Ltd. with 11.1 parts of "CATEP-5" (goods having 100 % of an active component), manufacturedbyToyo-Morton, Ltd., which is an epoxybased curing agent.

As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1,000 hours, good results were obtained in all of the change in degree of polarization, the change in dimension, the change in retardation and the deterioration of adhesiveness.

Using the obtained polarizing plate, a liquid crystal panel was obtained in the same manner as in Example 1. As a result of confirming a display screen of the obtained liquid crystal panel, it had good contrast and wide viewing angle.

<Example 8>

A polarizing plate was obtained in the same manner as in Example 1, except that the polyurethane-containing

adhesive was prepared by blending 100 parts of "TDW4575A" (polyether polyurethane; an aqueous solution having a solids content of 40 %), manufactured by Toyo-Morton, Ltd. with 11.1 parts of "CATRT-34" (goods having 100 % of an active component), manufactured by Toyo-Morton, Ltd. , which is an isocyanate based curing agent.

As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1,000 hours, good results were obtained in all of the change in degree of polarization, the change in dimension, the change in retardation and the deterioration of adhesiveness.

Using the obtained polarizing plate, a liquid crystal panel was obtained in the same manner as in Example 1. As a result of confirming a display screen of the obtained liquid crystal panel, it had good contrast and wide viewing angle.

<Example 9>

A polarizing plate was obtained in the same manner as in Example 1, except that the polyurethane-containing adhesive was prepared by blending 100 parts of "TDW4575A" (polyether polyurethane; an aqueous solution having a solids content of 40 %), manufactured by Toyo-Morton, Ltd. with 11.1 parts of "TDW4575B" (goods having 100 % of an active component), manufactured by Toyo-Morton, Ltd. , which is an isocyanate based curing agent.

As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1, 000 hours, good results were obtained in all of the change in degree of polarization, the change in dimension, the change in retardation and the deterioration of adhesiveness.

Using the obtained polarizing plate, a liquid crystal panel was obtained in the same manner as in Example 1. As a result of confirming a display screen of the obtained liquid crystal panel, it had good contrast and wide viewing angle.

<Example 10>

A polarizing plate was obtained in the same manner as in Example 1, except that the polyurethane-containing adhesive was prepared by blending 100 parts of "ADW-615" (polyether polyurethane; an aqueous solution having a solids content of 40 %), manufactured by Toyo-Morton, Ltd. with 11.1 parts of "CATEP-5" (goods having 100 % of an active component), manufacturedbyToyo-Morton, Ltd., which is an epoxy based curing agent and then mixing with a 5 % by weight aqueous solution of a polyvinyl alcohol resin (KURARAY PVA117, degree of polymerization: 1,700, degree of saponification: 98 to 99 %) in a mass ratio of 4/1.

As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1,000 hours, good results were obtained in all of the change in degree of polarization, the change in dimension, the change in retardation and the deterioration of adhesiveness.

Using the obtained polarizing plate, a liquid crystal panel was obtained in the same manner as in Example 1. As a result of confirming a display screen of the obtained liquid crystal panel, it had good contrast and wide viewing angle.

<Example 11>

A polarizing plate was obtained in the same manner as in Example 1, except that the polyurethane-containing adhesive was prepared by blending 100 parts of "ADW-615" (polyether polyurethane; an aqueous solution having a solids content of 40 %), manufactured by Toyo-Morton, Ltd. with 11.1 parts of "CATEP-5" (goods having 100 % of an active component), manufacturedbyToyo-Morton, Ltd., whichisanepoxybasedcuring agent and then mixing with a 5 % by weight aqueous solution of a carboxylic acid-modifiedpolyvinyl alcohol resin (KURARAY KL318, degree of saponification: 85 to 90 %) in a mass ratio of 4/1.

As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1, 000 hours, good results were obtained in all of the change in degree of polarization, the change in dimension, the change in retardation and the deterioration of adhesiveness.

Using the obtained polarizing plate, a liquid crystal panel was obtained in the same manner as in Example 1. As a result of confirming a display screen of the obtained liquid crystal panel, it had good contrast and wide viewing angle.

<Example 12>

A polarizing plate was obtained in the same manner as in Example 1, except that the polyurethane-containing adhesive was prepared by blending 100 parts of MDW-740 (polyester polyurethane; an aqueous solution having a solids content of 40 %), manufactured by Toyo-Morton, Ltd. with 11.1 parts of "CATRT-34" (goods having 100 % of an active component), manufactured by Toyo-Morton, Ltd. , which is an isocyanate based curing agent and then mixing with a 5 % by weight aqueous solution of a polyvinyl alcohol resin (KURARAY PVA117, degree of polymerization: 1,700, degree of saponification: 98 to 99 %) in a mass ratio of 4/1.

As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1, 000 hours, good results were obtained in all of the change in degree of polarization, the change in dimension, the change in retardation and the deterioration of adhesiveness.

Using the obtained polarizing plate, a liquid crystal panel was obtained in the same manner as in Example 1. As a result of confirming a display screen of the obtained liquid crystal panel, it had good contrast and wide viewing angle.

<Example 13>

A polarizing plate was obtained in the same manner as in Example 1, except that the polyurethane-containing adhesive was prepared by blending 100 parts of MDW-740 (polyester polyurethane; an aqueous solution having a solids content of 40 %), manufactured by Toyo-Morton, Ltd. with 11.1 parts of "CATRT-34" (goods having 100 % of an active component), manufactured by Toyo-Morton, Ltd. , which is an isocyanate based curing agent and then mixing with a 5 % by weight aqueous solution of a carboxylic acid-modified polyvinyl alcohol resin (KURARAY KL318, degree of saponification: 85 to 90 %) in a mass ratio of 4/1.

As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1,000 hours, good results were obtained in all of the change in degree of polarization, the change in dimension, the change in retardation and the deterioration of adhesiveness.

Using the obtained polarizing plate, a liquid crystal panel was obtained in the same manner as in Example 1. As a result of confirming a display screen of the obtained liquid crystal panel, it had good contrast and wide viewing angle.

<Example 14>

A polarizing plate was obtained in the same manner as in Example 1, except that the polyurethane-containing adhesive was prepared by blending 100 parts of "TDW4575A" (polyether polyurethane; an aqueous solution having a solids content of 40 %), manufactured by Toyo-Morton, Ltd. with 11.1 parts of "TDW4575B" (goods having 100 % of an active component), manufactured by Toyo-Morton, Ltd. , which is an isocyanate based curing agent and then mixing with a 5 % by weight aqueous solution of a polyvinyl alcohol resin (KURARAY PVA117, degree of polymerization: 1,700, degree of saponification: 98 to 99 %) in a mass ratio of 4/1.

As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1,000 hours, good results were obtained in all of the change in degree of polarization, the change in dimension, the change in retardation and the deterioration of adhesiveness.

Using the obtained polarizing plate, a liquid crystal panel was obtained in the same manner as in Example 1. As a result of confirming a display screen of the obtained liquid crystal panel, it had good contrast and wide viewing angle.

<Example 15>

A polarizing plate was obtained in the same manner as in Example 1, except that the polyurethane-containing adhesive was prepared by blending 100 parts of "TDW4575A" (polyether polyurethane; an aqueous solution having a

solids content of 40 %), manufactured by Toyo-Morton, Ltd. with 11.1 parts of "TDW4575B" (goods having 100 % of an active component), manufactured by Toyo-Morton, Ltd. , which is an isocyanate based curing agent and then mixing with a 5 % by weight aqueous solution of a carboxylic acid-modified polyvinyl alcohol resin (KURARAY KL318, degree of saponification: 85 to 90 %) in a mass ratio of 4/1.

As to the obtained polarizing plate, peeling of the evaluation of adhesiveness was tried to achieve. However, the polarizing plate was broken on the way of peeling, and the adhesiveness was thus good. The degree of polarization was 99.9 % so that the polarizing plate was confirmed to have sufficient properties as a polarizing plate. Also, in the environmental resistance test in a dry environment at 80˚C and an environment at 60˚C and 90 % RH, respectively for 1,000 hours, good results were obtained in all of the change in degree of polarization, the change in dimension, the change in retardation and the deterioration of adhesiveness.

Using the obtained polarizing plate, a liquid crystal panel was obtained in the same manner as in Example 1. As a result of confirming a display screen of the obtained liquid crystal panel, it had good contrast and wide viewing angle.

[Table 1]

| | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 |
|---|---|---|---|---|---|---|---|---|---|---|---|---|---|---|---|
| Resin | Fluorene-containing PC | | | | | | | | | | | | | | |
| Adhesive | ADW-615 | | | MDW-740 | | | TDW4575A | | | ADW-615 | | MDW-740 | | TDW4575A | |
| Crosslinking agent | CATEP-5 | CATR -34 | TDW4575B | CATEP-5 | CATRT -34 | TDW4575B | CATE-5 | CATRT -34 | TDW4575B | CATEP-5 | | CATRT-34 | | TDW4575B | |
| PVA | No | | | No | | | No | | | PVA117 | KL318 | PVA117 | KL318 | PVA117 | KL318 |
| Adhesiveness | ○ | ○ | ○ | ○ | ○ | ○ | ○ | ○ | ○ | ○ | ○ | ○ | ○ | ○ | ○ |
| Change in degree of polymerization | ○ | ○ | ○ | ○ | ○ | ○ | ○ | ○ | ○ | ○ | ○ | ○ | ○ | ○ | ○ |
| Change in retardation | ○ | ○ | ○ | ○ | ○ | ○ | ○ | ○ | ○ | ○ | ○ | ○ | ○ | ○ | ○ |
| Change in dimension | ○ | ○ | ○ | ○ | ○ | ○ | ○ | ○ | ○ | ○ | ○ | ○ | ○ | ○ | ○ |
| Deterioration of adhesiveness | ○ | ○ | ○ | ○ | ○ | ○ | ○ | ○ | ○ | ○ | ○ | ○ | ○ | ○ | ○ |

<Comparative Example 1>

A polarizing plate was obtained in the same manner as in Example 1, except for using an adhesive composed of a 5 % by weight aqueous solution of a polyvinyl alcohol resin (KURARAY PVA117, degree of polymerization: 1,700, degree of saponification: 98 to 99 %) as the adhesive.

As to the obtained polarizing plate, peeling of the evaluation of adhesiveness was tried to achieve. However, the protective (retardation) film was readily peeled off so that the adhesiveness was insufficient. Also, in the environmental resistance test in a dry environment at 80˚C and an environment at 60˚C and 90 % RH, respectively for 1,000 hours, though good results were obtained with respect to the change in dimension and the change in retardation, good results were not obtained with respect to the change in degree of polarization and the deterioration of adhesiveness.

[Table 2]

| | Comparative Example 1 |
|---|---|
| Resin | Fluorene-containing PC |
| Adhesive | PVA117 |
| Crosslinking agent | No |
| Adhesiveness | × |
| Change in degree of polymerization | × |
| Change in retardation | ○ |
| Change in dimension | ○ |
| Deterioration of adhesiveness | × |

<Example 16>

(a) Preparation of polarizer:

A polyvinyl alcohol film having a thickness of 120 μm was dipped in an aqueous solution containing 1 part of iodine, 2 parts of potassium iodide and 4 parts of boric acid and stretched 4 times at 50˚C, thereby obtaining a polarizer. On one surface of the obtained polarizer, a PVA based adhesive was coated, on the surface of which was then stuck a triacetyl cellulose film having been subjected to a saponification treatment and having a thickness of 50 μm. The obtained polarizer film is named a TAC-less film.

(b) Preparation of protective (retardation) film:

A pellet of a trade name: "TOPAS" 6013 (Tg: 140˚C), manufactured by TICONA, which has a [meso type] / [racemo type] ratio of 0.36/0.04 = 9 as to a stereostructure of a chain site of a norbornene unit and a molar ratio of an ethylene unit (A) to a norbornene unit (B) of (A)/(B) = 50/50, was dried at 100˚C for 4 hours, to which was then added 0.1 % by weight of powdered tris(2,4-di-tert-butylphenyl)phosphite, and the mixture was dry blended.

The obtained blend was melt extruded from a T die at a resin temperature of 270˚C by using a single screw extruder having a diameter of 30 mm and a powder sintered filter having a nominal size of 20 μm, thereby forming a film. Subsequently, the film was subjected to sequential biaxial stretching for carrying out a stretching treatment of 1.7 times at 155˚C in the machine direction and subsequently a stretching treatment of 1.9 times at 155˚C in the transverse direction, thereby obtaining a protective (retardation) film. The obtained protective (retardation) film had retardation values of R = 59 nm and K = 112 nm, a total light transmittance of 91.4 % and a haze of 0.2 %.

(c) Preparation of polyurethane-containing adhesive:

A polyurethane-containing adhesive was prepared by blending 100 parts of "ADW-615" (polyether polyurethane; an aqueous solution having a solids content of 40 %), manufactured by Toyo-Morton, Ltd. with 11.1 parts of "CATEP-5" (goods having 100 % of an active component), manufactured by Toyo-Morton, Ltd., which is an epoxy based curing agent.

One surface of the foregoing protective (retardation) film was subjected to a corona treatment; the polyurethane-containing adhesive as prepared above was applied between this surface and the triacetyl cellulose film-free surface of the foregoing TAC-less film; and the resultant was passed between nip rollers under a pressure of from about 0.2 to 0.3 MPa and then dried at 80˚C for 10 minutes, thereby obtaining a polarizing plate.

As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1,000 hours, good results were obtained in all of the change in degree of polarization, the change in dimension, the change in retardation and the deterioration of adhesiveness.

Polarizing plates on the both sides of a commercially available transmission VA liquid crystal panel were peeled off, and the polarizing plate obtained in this Example was stuck on each of the both sides of the liquid crystal cell via the pressure-sensitive adhesive such that it was disposed on the side of the liquid crystal cell, thereby obtaining a liquid crystal panel. As a result of confirming a display screen of the obtained liquid crystal panel, it had good contrast and wide viewing angle.

<Example 17>

A polarizing plate was obtained in the same manner as in Example 16, except that the polyurethane-containing adhesive was prepared by blending 100 parts of "ADW-615" (polyether polyurethane; an aqueous solution having a solids content of 40 %), manufactured by Toyo-Morton, Ltd. with 11.1 parts of "CATRT-34" (goods having 100 % of an active component), manufactured by Toyo-Morton, Ltd. , which is an isocyanate based curing agent.

As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1, 000 hours, good results were obtained in all of the change in degree of polarization, the change in dimension, the change in retardation and the deterioration of adhesiveness.

Using the obtained polarizing plate, a liquid crystal panel was obtained in the same manner as in Example 16. As a result of confirming a display screen of the obtained liquid crystal panel, it had good contrast and wide viewing angle.

<Example 18>

A polarizing plate was obtained in the same manner as in Example 16, except that the polyurethane-containing adhesive was prepared by blending 100 parts of "ADW-615" (polyether polyurethane; an aqueous solution having a solids content of 40 %), manufactured by Toyo-Morton, Ltd. with 11.1 parts of "TDW4575B" (goods having 100 % of an active component), manufactured by Toyo-Morton, Ltd. , which is an isocyanate based curing agent.

As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1, 000 hours, good results were obtained in all of the change in degree of polarization, the change in dimension, the change in retardation and the deterioration of adhesiveness.

Using the obtained polarizing plate, a liquid crystal panel was obtained in the same manner as in Example 16. As a result of confirming a display screen of the obtained liquid crystal panel, it had good contrast and wide viewing angle.

<Example 19>

A polarizing plate was obtained in the same manner as in Example 16, except that the polyurethane-containing adhesive was prepared by blending 100 parts of "MDW-740" (polyester polyurethane; an aqueous solution having a solids content of 40 %), manufactured by Toyo-Morton, Ltd. with 11.1 parts of "CATEP-5" (goods having 100 % of an active component), manufacturedbyToyo-Morton, Ltd., whichisanepoxybasedcuring agent.

As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1, 000 hours, good results were obtained in all of the change in degree of polarization, the change in dimension, the change in retardation and the deterioration of adhesiveness.

Using the obtained polarizing plate, a liquid crystal panel was obtained in the same manner as in Example 16.

As a result of confirming a display screen of the obtained liquid crystal panel, it had good contrast and wide viewing angle.

<Example 20>

A polarizing plate was obtained in the same manner as in Example 16, except that the polyurethane-containing adhesive was prepared by blending 100 parts of "MDW-740" (polyester polyurethane; an aqueous solution having a solids content of 40 %), manufactured by Toyo-Morton, Ltd. with 11.1 parts of "CATRT-34" (goods having 100 % of an active component), manufactured by Toyo-Morton, Ltd. , which is an isocyanate based curing agent.
As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1,000 hours, good results were obtained in all of the change in degree of polarization, the change in dimension, the change in retardation and the deterioration of adhesiveness.
Using the obtained polarizing plate, a liquid crystal panel was obtained in the same manner as in Example 16. As a result of confirming a display screen of the obtained liquid crystal panel, it had good contrast and wide viewing angle.

<Example 21>

A polarizing plate was obtained in the same manner as in Example 16, except that the polyurethane-containing adhesive was prepared by blending 100 parts of "MDW-740" (polyester polyurethane; an aqueous solution having a solids content of 40 %), manufactured by Toyo-Morton, Ltd. with 11.1 parts of "TDW4575B" (goods having 100 % of an active component), manufactured by Toyo-Morton, Ltd. , which is an isocyanate based curing agent.
As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1,000 hours, good results were obtained in all of the change in degree of polarization, the change in dimension, the change in retardation and the deterioration of adhesiveness.
Using the obtained polarizing plate, a liquid crystal panel was obtained in the same manner as in Example 16. As a result of confirming a display screen of the obtained liquid crystal panel, it had good contrast and wide viewing angle.

<Example 22>

A polarizing plate was obtained in the same manner as in Example 16, except that the polyurethane-containing adhesive was prepared by blending 100 parts of "TDW4575A" (polyether polyurethane; an aqueous solution having a solids content of 40 %), manufactured by Toyo-Morton, Ltd. with 11.1 parts of "CATEP-5" (goods having 100 % of an active component), manufacturedbyToyo-Morton, Ltd., whichisanepoxybasedcuring agent.
As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1, 000 hours, good results were obtained in all of the change in degree of polarization, the change in dimension, the change in retardation and the deterioration of adhesiveness.
Using the obtained polarizing plate, a liquid crystal panel was obtained in the same manner as in Example 16. As a result of confirming a display screen of the obtained liquid crystal panel, it had good contrast and wide viewing angle.

<Example 23>

A polarizing plate was obtained in the same manner as in Example 16, except that the polyurethane-containing adhesive was prepared by blending 100 parts of "TDW4575A" (polyether polyurethane; an aqueous solution having a solids content of 40 %), manufactured by Toyo-Morton, Ltd. with 11.1 parts of "CATRT-34" (goods having 100 % of an active component), manufactured by Toyo-Morton, Ltd., which is an isocyanate based curing agent.
As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1,000 hours, good results were obtained in all of the change in degree of polarization, the change in dimension, the

change in retardation and the deterioration of adhesiveness.

Using the obtained polarizing plate, a liquid crystal panel was obtained in the same manner as in Example 16. As a result of confirming a display screen of the obtained liquid crystal panel, it had good contrast and wide viewing angle.

<Example 24>

A polarizing plate was obtained in the same manner as in Example 16, except that the polyurethane-containing adhesive was prepared by blending 100 parts of "TDW4575A" (polyether polyurethane; an aqueous solution having a solids content of 40 %), manufactured by Toyo-Morton, Ltd. with 11.1 parts of "TDW4575B" (goods having 100 % of an active component), manufactured by Toyo-Morton, Ltd. , which is an isocyanate based curing agent.

As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1,000 hours, good results were obtained in all of the change in degree of polarization, the change in dimension, the change in retardation and the deterioration of adhesiveness.

Using the obtained polarizing plate, a liquid crystal panel was obtained in the same manner as in Example 16. As a result of confirming a display screen of the obtained liquid crystal panel, it had good contrast and wide viewing angle.

<Example 25>

A polarizing plate was obtained in the same manner as in Example 16, except that the polyurethane-containing adhesive was prepared by blending 100 parts of "ADW-615" (polyether polyurethane; an aqueous solution having a solids content of 40 %), manufactured by Toyo-Morton, Ltd. with 11.1 parts of "CATEP-5" (goods having 100 % of an active component), manufacturedbyToyo-Morton, Ltd., whichisanepoxybasedcuring agent and then mixing with a 5 % by weight aqueous solution of a polyvinyl alcohol resin (KURARAY PVA117, degree of polymerization: 1,700, degree of saponification: 98 to 99 %) in a mass ratio of 4/1.

As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1,000 hours, good results were obtained in all of the change in degree of polarization, the change in dimension, the change in retardation and the deterioration of adhesiveness.

Using the obtained polarizing plate, a liquid crystal panel was obtained in the same manner as in Example 16. As a result of confirming a display screen of the obtained liquid crystal panel, it had good contrast and wide viewing angle.

<Example 26>

A polarizing plate was obtained in the same manner as in Example 16, except that the polyurethane-containing adhesive was prepared by blending 100 parts of "ADW-615" (polyether polyurethane; an aqueous solution having a solids content of 40 %), manufactured by Toyo-Morton, Ltd. with 11.1 parts of "CATEP-5" (goods having 100 % of an active component), manufacturedbyToyo-Morton, Ltd., whichisanepoxybasedcuring agent and then mixing with a 5 % by weight aqueous solution of a carboxylic acid-modifiedpolyvinyl alcohol resin (KURARAY KL318, degree of saponification: 85 to 90 %) in a mass ratio of 4/1.

As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1,000 hours, good results were obtained in all of the change in degree of polarization, the change in dimension, the change in retardation and the deterioration of adhesiveness.

Using the obtained polarizing plate, a liquid crystal panel was obtained in the same manner as in Example 16. As a result of confirming a display screen of the obtained liquid crystal panel, it had good contrast and wide viewing angle.

<Example 27>

A polarizing plate was obtained in the same manner as in Example 16, except that the polyurethane-containing adhesive was prepared by blending 100 parts of MDW-740 (polyester polyurethane; an aqueous solution having a solids content of 40 %), manufactured by Toyo-Morton, Ltd. with 11.1 parts of "CATRT-34" (goods having 100 % of an active

component), manufactured by Toyo-Morton, Ltd. , which is an isocyanate based curing agent and then mixing with a 5 % by weight aqueous solution of a polyvinyl alcohol resin (KURARAY PVA117, degree of polymerization: 1,700, degree of saponification: 98 to 99 %) in a mass ratio of 4/1.

As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1, 000 hours, good results were obtained in all of the change in degree of polarization, the change in dimension, the change in retardation and the deterioration of adhesiveness.

Using the obtained polarizing plate, a liquid crystal panel was obtained in the same manner as in Example 16. As a result of confirming a display screen of the obtained liquid crystal panel, it had good contrast and wide viewing angle.

<Example 28>

A polarizing plate was obtained in the same manner as in Example 16, except that the polyurethane-containing adhesive was prepared by blending 100 parts of MDW-740 (polyester polyurethane; an aqueous solution having a solids content of 40 %), manufactured by Toyo-Morton, Ltd. with 11.1 parts of "CATRT-34" (goods having 100 % of an active component), manufactured by Toyo-Morton, Ltd. , which is an isocyanate based curing agent and then mixing with a 5 % by weight aqueous solution of a carboxylic acid-modified polyvinyl alcohol resin (KURARAY KL318, degree of saponification: 85 to 90 %) in a mass ratio of 4/1.

As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1,000 hours, good results were obtained in all of the change in degree of polarization, the change in dimension, the change in retardation and the deterioration of adhesiveness.

Using the obtained polarizing plate, a liquid crystal panel was obtained in the same manner as in Example 16. As a result of confirming a display screen of the obtained liquid crystal panel, it had good contrast and wide viewing angle.

<Example 29>

A polarizing plate was obtained in the same manner as in Example 16, except that the polyurethane-containing adhesive was prepared by blending 100 parts of "TDW4575A" (polyether polyurethane; an aqueous solution having a solids content of 40 %), manufactured by Toyo-Morton, Ltd. with 11.1 parts of "TDW4575B" (goods having 100 % of an active component), manufactured by Toyo-Morton, Ltd. , which is an isocyanate based curing agent and then mixing with a 5 % by weight aqueous solution of a polyvinyl alcohol resin (KURARAY PVA117, degree of polymerization: 1,700, degree of saponification: 98 to 99 %) in a mass ratio of 4/1.

As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for 1, 000 hours, good results were obtained in all of the change in degree of polarization, the change in dimension, the change in retardation and the deterioration of adhesiveness.

Using the obtained polarizing plate, a liquid crystal panel was obtained in the same manner as in Example 16. As a result of confirming a display screen of the obtained liquid crystal panel, it had good contrast and wide viewing angle.

<Example 30>

A polarizing plate was obtained in the same manner as in Example 16, except that the polyurethane-containing adhesive was prepared by blending 100 parts of "TDW4575A" (polyether polyurethane; an aqueous solution having a solids content of 40 %), manufactured by Toyo-Morton, Ltd. with 11.1 parts of "TDW4575B" (goods having 100 % of an active component), manufactured by Toyo-Morton, Ltd. , which is an isocyanate based curing agent and then mixing with a 5 % by weight aqueous solution of a carboxylic acid-modified polyvinyl alcohol resin (KURARAY KL318, degree of saponification: 85 to 90 %) in a mass ratio of 4/1.

As to the obtained polarizing plate, peeling of the evaluation of adhesiveness was tried to achieve. However, the polarizing plate was broken on the way of peeling, and the adhesiveness was thus good. The degree of polarization was 99.8 % so that the polarizing plate was confirmed to have sufficient properties as a polarizing plate. Also, in the environmental resistance test in a dry environment at 80˚C and an environment at 60˚C and 90 % RH, respectively for

1,000 hours, good results were obtained in all of the change in degree of polarization, the change in dimension, the change in retardation and the deterioration of adhesiveness.

[Table 3]

| | Example 16 | Example 17 | Example 18 | Example 19 | Example 20 | Example 21 | Example 22 | Example 23 | Example 24 | Example 25 | Example 26 | Example 27 | Example 28 | Example 29 | Example 30 |
|---|---|---|---|---|---|---|---|---|---|---|---|---|---|---|---|
| Resin | TOPAS | | | | | | | | | | | | | | |
| Adhesive | ADW-615 | | | MDW-740 | | | TDW4575A | | | ADW-615 | | MDW-740 | | TDW4575A | |
| Crosslinking agent | CATEP-5 | CATRT - 34 | TDW 4575B | CATEP-5 | CATRT - 34 TDW 4575B | | CATEP-5 | CATRT - 34 TDW 4575B | | CATEP-5 | | CATRT-34 | | TDW4575B | |
| PVA | No | | | No | | | No | | | PVA117 | KL318 | PVA117 | KL318 | PVA117 | KL318 |
| Adhesiveness | ○ | ○ | ○ | ○ | ○ | ○ | ○ | ○ | ○ | ○ | ○ | ○ | ○ | ○ | ○ |
| Change in degree of polymerization | ○ | ○ | ○ | ○ | ○ | ○ | ○ | ○ | ○ | ○ | ○ | ○ | ○ | ○ | ○ |
| Change in retardation | ○ | ○ | ○ | ○ | ○ | ○ | ○ | ○ | ○ | ○ | ○ | ○ | ○ | ○ | ○ |
| Change in dimension | ○ | ○ | ○ | ○ | ○ | ○ | ○ | ○ | ○ | ○ | ○ | ○ | ○ | ○ | ○ |
| Deterioration of adhesiveness | ○ | ○ | ○ | ○ | ○ | ○ | ○ | ○ | ○ | ○ | ○ | ○ | ○ | ○ | ○ |

<Comparative Example 2>

A polarizing plate was obtained in the same manner as in Example 16, except for using an adhesive composed of a 5 % by weight aqueous solution of a polyvinyl alcohol resin (KURARAY PVA117, degree of polymerization: 1,700, degree of saponification: 98 to 99 %) as the adhesive.

As to the obtained polarizing plate, peeling of the evaluation of adhesiveness was tried to achieve. However, the protective (retardation) film was readily peeled off so that the adhesiveness was insufficient. Also, in the environmental resistance test in a dry environment at 80˚C and an environment at 60˚C and 90 % RH, respectively for 1,000 hours, though good results were obtained with respect to the change in dimension and the change in retardation, good results were not obtained with respect to the change in degree of polarization and the deterioration of adhesiveness.

[Table 4]

| | Comparative Example 2 |
|---|---|
| Resin | TOPAS |
| Adhesive | PVA117 |
| Crosslinking agent | No |
| Adhesiveness | × |
| Change in degree of polymerization | × |
| Change in retardation | ○ |
| Change in dimension | ○ |
| Deterioration of adhesiveness | × |

<Comparative Example 3>

A polarizing plate was obtained in the same manner as in Example 16, except for using, as a material of the protective (retardation) film, a cyclic olefin based copolymer (a trade name: ZEONOR ZF-14, manufactured by Zeon Corporation) obtained through ring-opening polymerization of a cyclic olefin and then hydrogenation of double bonds of the principal chain of the formed polymer.

As to the obtained polarizing plate, peeling of the evaluation of adhesiveness was tried to achieve. However, the protective (retardation) film was readily peeled off so that the adhesiveness was insufficient.

[Industrial Applicability]

The polarizing plate of the invention is provided with a retardation function, is able to form a liquid crystal display device having a wide viewing angle and an excellent display quality in contrast, etc. and can be used in any mode of a transmission type, a reflection type, a semi-transmission reflection type or the like including STN, TN, VA, IPS and OCB modes, etc. Furthermore, the polarizing plate of the invention can also be used for other display devices using a polarizing plate, for example, one using a ferroelectric liquid crystal or an antiferroelectric liquid crystal, a liquid crystal protector, an organic EL display device, etc. and can also be used in the field using a polarizing plate other than that of a display device, for example, a polarizing spectacle, etc.

## Claims

1. A polarizing plate comprising a polarizer having, on at least one surface thereof, a protective film having a function as a retardation film via an adhesive layer, wherein
the adhesive layer is formed of an adhesive containing a polyurethane; and
the protective film is composed of a polycarbonate based resin or an amorphous polyolefin resin having a glass transition temperature in the range of from 100˚C to 180˚C, which is a copolymer containing an ethylene unit represented by the following formula (E) and a cyclic olefin unit represented by the following formula (F):

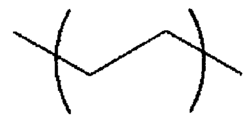

(E)

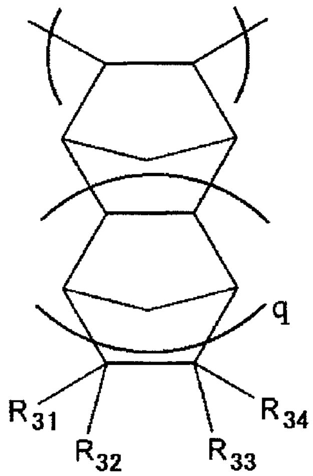

(F)

wherein q is 0 or a positive integer; $R_{31}$ to $R_{34}$ are the same or different and are each selected from the group consisting of a hydrogen atom, a halogen atom and an aliphatic or aromatic hydrocarbon group having from 1 to 10 carbon atoms; $R_{31}$ and $R_{32}$, or $R_{33}$ and $R_{34}$ may be taken together to form an alkylidene group; and $R_{31}$ or $R_{32}$ and $R_{33}$ or $R_{34}$ may be taken together to form a ring, and the ring may have a double bond.

**2.** The polarizing plate according to claim 1, wherein the polyurethane has an ether bond in a principal chain thereof.

**3.** The polarizing plate according to claim 1 or 2, wherein the adhesive is aqueous.

**4.** The polarizing plate according to any one of claims 1 to 3, wherein the adhesive contains polyvinyl alcohol or a derivative thereof.

**5.** The polarizing plate according to any one of claims 1 to 4, wherein the adhesive contains an isocyanate based crosslinking agent and/or an epoxy based crosslinking agent.

**6.** The polarizing plate according to any one of claims 1 to 5, wherein the polycarbonate based resin has a fluorene ring.

**7.** The polarizing plate according to any one of claims 1 to 5, wherein the cyclic olefin unit is a norbornene unit, and an existent ratio of a meso type and a racemo type as to stereoregularity of a two-chain site (dyad) of the norbornene unit is [meso type]/[racemo type] > 4.

**8.** A liquid crystal display device comprising the polarizing plate according to any one of claims 1 to 7.

**9.** A method for producing the polarizing plate according to any one of claims 1 to 7, which comprises coating an adhesive containing a polyurethane on at least one surface of a protective film and/or a polarizer and subsequently sticking the polarizer and the protective film to each other.

**INTERNATIONAL SEARCH REPORT**

International application No. PCT/JP2007/060969

A. CLASSIFICATION OF SUBJECT MATTER
*G02B5/30*(2006.01)i, *B32B27/36*(2006.01)i, *B32B27/40*(2006.01)i, *C08G18/48* (2006.01)i, *C09J129/04*(2006.01)i, *C09J163/00*(2006.01)i, *C09J175/04* (2006.01)i, *C09J175/08*(2006.01)i, *G02F1/1335*(2006.01)i

According to International Patent Classification (IPC) or to both national classification and IPC

B. FIELDS SEARCHED

Minimum documentation searched (classification system followed by classification symbols)
G02B5/30, B32B27/36, B32B27/40, C08G18/48, C09J129/04, C09J163/00, C09J175/04, C09J175/08, G02F1/1335

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2005-114995 A (Sekisui Chemical Co., Ltd.), 28 April, 2005 (28.04.05), Claims; Par. Nos. [0001], [0028] (Family: none) | 1,3,4,8,9<br>2,5,6 |
| Y | JP 2004-354557 A (Nitto Denko Corp.), 16 December, 2004 (16.12.04), Par. Nos. [0061], [0062], [0126] (Family: none) | 2,5 |
| Y | JP 2005-189632 A (Teijin Ltd.), 14 July, 2005 (14.07.05), Claims (Family: none) | 6 |

☐ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 20 August, 2007 (20.08.07) | 04 September, 2007 (04.09.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003279729 A
- JP 2007114762 A